# EUROPÄISCHE PATENTANMELDUNG

(11) **EP 3 235 888 A2**
(43) Veröffentlichungstag der Anmeldung: **25.10.2017**
(21) Anmeldenummer: 16205554.5
(22) Anmeldetag: 03.05.2006
(51) Int. Cl.: C09J 11/04, C09C 1/30, C08J 3/24, C09C 3/08, C09C 3/12, B82Y 30/00, C09J 7/02

(54) **HAFTKLEBEMASSEN UND VERFAHREN ZU DEREN HERSTELLUNG**

(30) Priorität: 12.05.2005 DE 102005022782
(62) Teilanmeldung aus: 06754969.1
(71) Anmelder: tesa SE, 22848 Norderstedt (DE)
(72) Erfinder: Dollase, Thilo, 22397 Hamburg (DE); Escudero Vallejo, Aranzazu, 22763 Hamburg (DE); Lühmann, Dr. Bernd, 22844 Norderstedt (DE)

(57) **Zusammenfassung**

Die Erfindung betrifft ein Verfahren zur Herstellung einer Haftklebemasse auf Basis zumindest eines Polymers, bei welchem eine Vernetzung des zumindest einen Polymers durchgeführt wird, wobei das Polymer funktionelle Gruppen Y aufweist, wobei weiterhin das Polymer mit zumindest einer Sorte funktionalisierter Partikeln versetzt ist, welche zumindest eine nichtpolymere Basiseinheit aufweisen, dadurch gekennzeichnet, dass die Partikeln eine Oberflächenmodifikation der Basiseinheit aufweisen, wobei die Oberflächenmodifikation der Partikeln zumindest eine Sorte funktioneller Gruppen X aufweist, und wobei die Vernetzung des Polymers zumindest zum Teil durch eine Reaktion der funktionellen Gruppen X der Partikeln und der funktionellen Gruppen Y des Polymers bewirkt wird, wobei die zumindest eine Basiseinheit der zumindest einen funktionalisierten Partikelsorte ein amorphes oder kristallines Oxid anorganischer Natur ist und die Reaktion zur Bewirkung der Vernetzung der Haftklebemasse eine Kopplungsreaktion unter Bildung kovalenter Bindungen ist. Weiterhin betrifft die Erfindung eine Haftklebemassen, basierend auf zumindest einer vernetzten Polymerkomponente, bei welchen die Vernetzung der Polymerkomponente zumindest zum Teil durch Einbau von funktionalisierten Partikeln bewirkt wird, wobei die Partikeln zumindest eine nichtpolymere Basiseinheit sowie eine Oberflächenmodifikation dieser Basiseinheit aufweisen, wobei die Oberflächenmodifikation der Partikeln zumindest eine Sorte funktioneller Gruppen X aufweist, welche in der Lage sind, mit in der Polymerkomponente vorhandenen funktionellen Gruppen Y zu reagieren, sowie die Verwendung von oberflächenmodifizierten funktionalisierten Partikeln mit einer nichtpolymeren Basiseinheit als Vernetzungsreagenzien zur Vernetzung von Polymeren zur Herstellung von Haftklebemassen.

## Beschreibung

Die vorliegende Erfindung betrifft Haftklebemassen, die bevorzugt lösungsmittelfrei prozessiert werden können und sich neben guter Verarbeitbarkeit und insbesondere Beschichtbarkeit durch gute Produkteigenschaften auszeichnen. Die Erfindung umfasst die Zusammensetzung neuartiger Haftklebemassenformulierungen, deren Herstellung, Verarbeitung und Verwendung in selbstklebenden Produkten. Ferner ist ein neuartiges Konzept Teil dieser Erfindung, über das die Kombination aus guter Verarbeitbarkeit und guten Produkteigenschaften für solche Haftklebemassenformulierungen realisiert werden kann.

### Stand der Technik

Im Bereich der Klebstoffe zeichnen sich Haftklebstoffe insbesondere durch ihre permanente Klebrigkeit aus. Ein Material, das permanente Klebrigkeit aufweist, muss zu jedem Zeitpunkt eine geeignete Kombination aus adhäsiven und kohäsiven Eigenschaften aufweisen. Dies unterscheidet es beispielsweise von reaktiven Klebstoffen, die im nicht ausreagierten Zustand kaum Kohäsion bieten. Für gute Produkteigenschaften gilt es, Haftklebemassen so einzustellen, dass die Balance aus adhäsiven und kohäsiven Eigenschaften optimal austariert ist. Diese Balance wird typischerweise dadurch erreicht, dass Polymerketten, die in Haftklebemasseformulierungen enthalten sind, in weitmaschige Netzwerke umgewandelt werden. Die Natur des Netzwerks hat dabei einen entscheidenden Einfluss auf die adhäsiven und kohäsiven Eigenschaften der Haftklebemasse. Ein Material mit ausgeprägter Vernetzung zeigt zwar gute Kohäsion, doch ist die Nachgiebigkeit reduziert, so dass sich das Material nur unzureichend an die Rauhigkeit einer Substratoberfläche anpassen kann. Zudem kann ein Material mit ausgeprägter Vernetzung nur in geringerem Maße Verformungsenergie, wie sie unter Belastung auftritt, dissipieren. Durch beide Phänomene wird die Klebkraft reduziert. Ein geringfügig vernetztes Material dagegen kann zwar gut auf rauhe Oberflächen auffließen und Verformungsenergie dissipieren, so dass die Anforderungen an die Adhäsion erfüllt sein können, jedoch widersteht das Material auf Grund einer reduzierten Kohäsion auf nur unzureichende Weise einer Belastung.

Eine Vernetzungsart, die einen Einfluss auf die Adhäsions/Kohäsions-Balance hat, sind temporäre Polymerkettenverschlaufungen. Diese reichen jedoch nur dann für eine genügende Kohäsion der Haftklebemasse aus, wenn die Molmasse der Polymere hinreichend hoch ist. Haftklebemassen basierend auf Naturkautschuken können alleinig auf diesem Vernetzungsprinzip beruhen. Weitere Möglichkeiten, die Vernetzung der Haftklebemasse einzustellen, sind chemische und damit irreversible Vernetzungen. Eine chemische Vernetzung kann ferner durch strahlenchemische Behandlung der Haftklebemassen erreicht werden. Weiterhin ist es möglich, physikalische Vernetzungsprinzipien zu nutzen. Beispiele für solche, typischerweise thermoreversiblen Vernetzungen in Haftklebemassen liegen in thermoplastischen Elastomeren wie in einigen Blockcopolymeren oder semikristallinen Polymeren vor.

Neben den angesprochenen Vernetzungsprinzipien können auch Füllstoffe zur Steigerung der Kohäsion eingesetzt werden. Dabei führt häufig eine Kombination aus Füllstoff/Füllstoff-Wechselwirkungen und Füllstoff/Polymer-Wechselwirkungen zu der gewünschten Verstärkung der Polymermatrix. Eine hierauf basierende Kohäsionssteigerung stellt eine weitere physikalische Vernetzungsart dar.

Für Füllstoffe, die im Hinblick auf einen verstärkenden Effekt in Haftklebemassen genannt werden, ist insbesondere die Klasse der pyrogenen Kieselsäuren zu nennen. Sie werden u. a. als Verdickungsmittel, Gelierungsmittel oder Thixotropiermittel in Fluiden unterschiedlichster Art eingesetzt, wobei man ihren Einfluss auf die rheologischen Eigenschaften der Fluide nutzt. Dabei wird der Einsatz von hydrophiler und hydrophober Kieselsäure beschrieben. Beispiele für die Verwendung von pyrogener Kieselsäure auf dem Gebiet der Haftklebemassen sind in US 4,163,081 durch Dow Corning, US 4,710,536 durch 3M und in DE 102 08 843 A1 durch BASF AG beschrieben.

Als weitere Füllstoffe wurden in WO 02/81586 A1 durch 3M, in WO 02/24756 A2 durch Rohm & Haas und in JP 2002 167,557 durch Sekisui die Verwendung von modifizierten Schichtsilikaten zur Verbesserung der Produkteigenschaften beschrieben.

In allen diesen Fällen resultiert die Verstärkung durch einen Einfluss der Partikel auf den Elastizitätsmodul des Elastomerkomposits. Die Wechselwirkung wird dabei durch physikalische Wechselwirkungen zwischen einzelnen Partikeln einerseits und Partikeln und Polymeren andererseits hervorgerufen. Oftmals reichen diese physikalischen Wechselwirkungen jedoch nicht aus, um bereits geringen mechanischen Deformationen, wie sie beispielsweise bei der Belastung einer Haftklebemassenfuge durch Scherung oder Schälung auftreten können, zu widerstehen. Dieses nichtlineare Phänomen ist als Payne-Effekt bekannt und äußert sich als Elastizitätsmodulverlust unter Deformation. Eine Übersicht zur Beschreibung dieses Effekts und zu verschiedenen mechanistischen Erklärungsansätzen geben Heinrich und Klüppel [G. Heinrich, M. Klüppel, Adv. Polym. Sci., 2002, 160, 1 - 44].

Im vorangegangenen Teil wurden verschiedene Beispiele für Vernetzungsarten gegeben, wie sie in Haftklebemassen zur Verbesserung der Produkteigenschaften, insbesondere der Kohäsion, angewendet werden können. Für jede dieser Vernetzungsarten stellt sich die Frage, inwieweit sie einen Einfluss auf die Verarbeitungseigenschaften und hier insbesondere das Beschichtungsverhalten haben. Eine diesbezügliche Diskussion wird im Folgenden vorgenommen.

Neben den Produkteigenschaften und damit der optimalen Balance aus adhäsiven und kohäsiven Eigenschaften einer Haftklebemasse ist auch ihre Verarbeitbarkeit von zentraler Bedeutung. Im Allgemeinen verringert sich die Verarbeitbarkeit durch die Vernetzung einer Formulierung. Meistens wird die Verarbeitbarkeit sogar unmöglich. Daher ist es vorteilhaft, die Vernetzung erst während oder nach der Verarbeitung insbesondere während oder nach der Beschichtung durchzuführen oder zu initiieren. Resultiert der Vernetzungszustand jedoch aus der bloßen Existenz eines Bestandteils in der Formulierung, wie es bei den oben genannten Füllstoffen der Fall ist, dann wird bereits eben dadurch das Verarbeitungsverhalten beeinträchtigt. Polymere mit hohen Molmassen zählen ebenso zu Formulierungsbestandteilen, die aufgrund ihres Verschlaufungszustands vorteilhafte Produkteigenschaften aufweisen, aber in der Verarbeitbarkeit - ebenfalls aufgrund ihres Verschlaufungszustands - Nachteile zeigen können. In beiden Fällen, also bei Verschlaufungen und Füllstoffen, wirken sich die physikalischen Prinzipien, die zur Vernetzung des Haftklebemassensystems und damit vorteilhaften Produkteigenschaften führen, negativ auf das Verarbeitungsverhalten, insbesondere die Beschichtbarkeit, aus. Klassische Ansätze, dieses Dilemma zu umgehen, beruhen auf der Verwendung von Lösungsmitteln als Prozesshilfsmitteln. Ein gesteigertes Umweltbewusstsein und der Wunsch nach immer effizienteren Produktionsverfahren begründen jedoch den Trend zu lösungsmittelfreien Prozessen. Im Vergleich zu lösungsmittelhaltigen Verarbeitungsverfahren weisen die polymerbasierenden Haftklebstoffrohmassen bei den sogenannten Hotmelt-Verfahren (Heißschmelz-Verfahren) in ihrer Schmelze durch die Verschlaufungen und/oder Füllstoffpartikel einen Vernetzungszustand auf, der mit deutlich höheren Viskositäten und Elastizitäten verbunden ist.

Im Gegensatz zu physikalischen Vernetzungsarten bieten chemische Vernetzungsmethoden den Vorteil, dass die Netzwerkbildung durch geeignete Prozessführung erst während der Verarbeitung initiiert werden kann. Jedoch ist die Verwendung chemischer Vernetzer durch ihre Reaktivität über die Topfzeit limitiert. Bildet sich das Netzwerk in einer zu ausgeprägten Weise, bevor das Material beschichtet ist, dann führt die bereits gestiegene Elastizität zu einer Verschlechterung der Verarbeitungseigenschaften, und es können Beschichtungsbilder verminderter Qualität resultieren. Eine besondere Schwierigkeit ergibt sich bei lösungsmittelfreien Systemen, da hier erhöhte Temperaturen für die Verarbeitung notwendig sind, was gleichzeitig zu einer Beschleunigung der chemischen Vernetzungsreaktion führt. Ein Beispiel für ein solches System wird in US 4,524,104 durch Sanyo beschrieben. Strahlenchemische Vernetzungsmethoden erscheinen in diesem Sinne vorteilhaft, da erst nach der Beschichtung die Netzwerkbildung gezielt initiiert wird, wie es beispielsweise in EP 377 199 durch BASF vorgeschlagen wird. Um jedoch Netzwerke mit einer Struktur zu erhalten, die den späteren Produktanforderungen im Hinblick auf Scherfestigkeit genügen, sind abermals Polymere mit recht hoher Molmasse erforderlich, die wiederum durch ihren Verschlaufungszustand Nachteile im Verarbeitungsverhalten aufweisen können.

Typischerweise verschlechtert sich die Verarbeitbarkeit eines Materials mit der Erhöhung seiner Elastizität. Netzwerkbildung führt dabei immer zu einer Steigerung des Speichermoduls und damit höherer Elastizität. In Folge dessen verschlechtert sich die Fließfähigkeit, die zur Verarbeitung und zum Beschichten benötigt wird, oder geht sogar gänzlich verloren. Bei der Beschichtung können dann Inhomogenitäten im Beschichtungsbild bis hin zum Schmelzebruch auftreten. Verschiedene Autoren beschreiben dieses Phänomen insbesondere für Kapillar- und Extrusionsdüsen. Literatur hierzu ist bei Pahl et al. [M. Pahl, W. Gleißle, H.-M. Laun, Praktische Rheologie der Kunststoffe und Elastomere, 4. Aufl., 1995, VDI Verlag, Düsseldorf, S. 191f] und Tanner [R. I. Tanner, Engineering Rheology, 2. Aufl., 2000, Oxford University Press, Oxford, S. 523f] zu finden.

Es werden daher Systeme gesucht, die bevorzugt lösungsmittelfrei beschichtbar sind und die eine Kombination aus guten Produkteigenschaften einerseits - und zwar hier insbesondere im Bezug auf Kohäsion - aufweisen und andererseits verbesserte Verarbeitungseigenschaften, insbesondere Beschichtbarkeit zeigen.

Ein besonders vorteilhaftes Beispiel für Systeme, die dieser Anforderungskombination zumindest zum Teil genügen, stellen Blockcopolymere dar, die Segmente enthalten, die bei hohen Temperaturen erweichen (die so genannte Hartphase), und andere, die bei Anwendungstemperatur geschmolzen vorliegen. Die Erweichungstemperatur der Hartphase ist durch die Verwendung spezieller Monomere typischerweise so eingestellt, dass bei Raumtemperatur gute Produkteigenschaften vorherrschen, das Material aber bei prozesstechnisch sinnvollen Temperaturen auf einfache Weise aus der Schmelze beschichtet werden kann. Da diese Materialien typischerweise keine hohen Molmassen aufweisen, liegt ihre Schmelzviskosität und die Elastizität, sobald die Hartphase erweicht vorliegt, vergleichsweise niedrig.

Nachteilig an den angesprochenen Haftklebemassen basierend auf Blockcopolymeren ist jedoch ihre Wärmescherfestigkeit, die durch die bei erhöhter Temperatur einsetzende Erweichung der Hartdomänen limitiert ist. Als ein weiterer Nachteil sind die aufwendigen Herstellungsbedingungen für Blockcopolymere zu nennen. Um Polymere mit der geforderten blockartigen Struktur in ausreichender Qualität herstellen zu können, sind kontrollierte oder lebende Polymerisationverfahren erforderlich, die zum Teil aufwendig sind. Zudem sind nicht immer alle Monomerkombinationen auf einfache Weise realisierbar. Damit ist der Blockcopolymeransatz einerseits nicht als universell also flexibel für viele Polymersysteme anzusehen. Andererseits besteht der Bedarf an Haftklebemassen mit einer besseren Wärmescherfestigkeit.

Ziel der vorliegenden Erfindung ist es daher, ein flexibles Konzept zur Verfügung zu stellen, das eine geeignete Kombination von Material und Verfahren umfasst, so dass bevorzugt lösungsmittelfrei prozessierbare Haftklebemassen mit guten Verarbeitungseigenschaften und guten Produkteigenschaften hergestellt werden können.

Wie jetzt gefunden wurde, lässt sich diese Anforderungskombination bestehend aus guter Verarbeitbarkeit und guten Produkteigenschaften dadurch lösen, dass ein Verfahren zur Herstellung von vernetzten Haftklebemassen eingesetzt wird, bei welchem eine spezielle Haftklebemassenformulierung derartig funktionalisierte Partikeln enthält, dass die Partikeln während oder nach der Beschichtung durch Einwirken von Strahlungsenergie, insbesondere von elektromagnetischer Strahlung, von Partikelstrahlung und/oder thermischer Energie mit zumindest einer Sorte polymerer Bestandteile der Haftklebemassenformulierung verknüpft werden können.

### Beschreibung

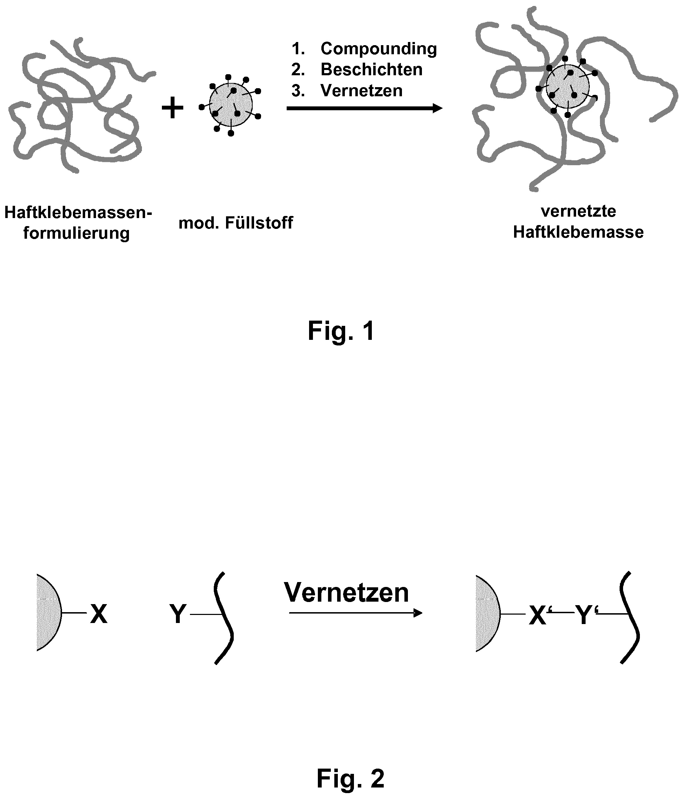

Die vorliegende Erfindung betrifft ein Verfahren zur Herstellung einer vernetzten Haftklebemasse, vernetzte Haftklebemassen, welche nach einem derartigen Verfahren erhältlich sind, sowie die Verwendung derartiger Haftklebemassen. Weiterhin umfasst die Erfindung Zwischenprodukte aus einem derartigen Verfahren, insbesondere die Zusammensetzung neuartiger Formulierungen für Haftklebemassen. Die Kombination der erfindungsgemäßen neuartigen Haftklebemassenformulierungen mit dem erfindungsgemäßen Herstellungsverfahren ist ebenfalls erfindungsgemäß und ein zentraler Bestandteil dieser Anmeldung (vgl. hierzu auch Fig. 1).

Die Erfindung betrifft ein Verfahren zur Herstellung einer Haftklebemasse auf Basis zumindest eines Polymers A, bei welchem eine Vernetzung des zumindest einen Polymers A durchgeführt wird, wobei das Polymer funktionelle Gruppen Y aufweist, wobei weiterhin das Polymer mit zumindest einer Sorte funktionalisierter Partikeln B (im weiteren auch "Füllstoffpartikeln" genannt) versetzt ist. Die Partikeln weisen zumindest eine nichtpolymere Basiseinheit sowie eine Oberflächenmodifikation dieser Basiseinheit auf, die Oberflächenmodifikation der Basiseinheit zumindest eine Sorte funktioneller Gruppen X. Die Vernetzung des Polymers wird erfindungsgemäß zumindest zum Teil durch eine Reaktion der funktionellen Gruppen X der Partikeln und der funktionellen Gruppen Y des Polymers bewirkt. Die Vernetzung kann im erfindungsgemäßen Sinne auch vollständig mittels der funktionalisierten Partikeln bewirkt werden.

Die Unteransprüche betreffen vorteilhafte Varianten des erfindungsgemäßen Verfahrens.

Die Erfindung betrifft weiterhin eine Haftklebemasse, basierend auf zumindest einer vernetzten Polymerkomponente A, wobei die Vernetzung der Polymerkomponente A zumindest zum Teil durch Einbau von funktionalisierten Partikeln B bewirkt wird, wobei die Partikeln B zumindest eine nichtpolymere Basiseinheit sowie eine Oberflächenmodifikation dieser Basiseinheit aufweisen, wobei die Oberflächenmodifikation der Partikeln B zumindest eine Sorte funktioneller Gruppen X aufweist, welche in der Lage sind, mit in der Polymerkomponente A vorhandenen funktionellen Gruppen Y zu reagieren.

Insbesondere als erfindungsgemäß herausgestellt werden soll eine solche Haftklebemasse, wenn sie nach den als erfindungsgemäß beschriebenen Verfahren erhältlich ist.

Die Erfindung betrifft zusätzlich die Verwendung von oberflächenmodifizierten Partikeln mit einer nichtpolymeren Basiseinheit, insbesondere von solchen wie im Rahmen dieser Schrift beschriebenen Partikeln, als Vernetzungsreagenzien von Polymeren zur Herstellung von Haftklebemassen.

Weiterhin als erfindungsgemäß gelten die noch nicht vernetzten, mit den funktionalisierten Partikeln B versetzten Polymere A. Dabei können in der zu vernetzenden Haftklebemasse weitere Komponenten anwesend sein.

Die erfindungsgemäßen Haftklebemassenformulierungen enthalten zumindest eine Sorte eines Polymers A, das zumindest eine Sorte an Gruppen vom Typ Y enthält, sowie zumindest eine Sorte an Füllstoffpartikeln B, die an der Partikeloberfläche zumindest eine Sorte an Gruppen vom Typ X enthalten. Gruppen vom Typ Y und vom Typ X sind im Sinne dieser Erfindung so gewählt, dass durch Einwirken elektromagnetischer Strahlung, Partikelstrahlung und/oder thermischer Energie eine Bindung zwischen zumindest einer Gruppe vom Typ Y und zumindest einer funktionellen Gruppe vom Typ X gebildet wird, so dass sich ein Addukt vom Typ B-X'-Y'-A entsteht (siehe hierzu Abbildung 2). Dabei deutet die Bezeichnung X' an, dass sich die Struktur der funktionellen Gruppe X nach abgelaufener Reaktion geändert haben kann. In gleicher Weise zeigt die Bezeichnung Y' an, dass sich die Struktur der funktionellen Gruppe Y nach abgelaufener Reaktion geändert haben kann. Es ist ebenfalls erfindungsgemäß, wenn sich die funktionellen Gruppen X und Y nicht in ihrer Struktur geändert haben, aber trotzdem eine Verknüpfung eingegangen sind.

In dieser Beschreibung sind unter den Begriffen "Elektromagnetische Strahlung" und "Partikelstrahlung" alle Strahlungsformen zu verstehen, die bei V. D. McGinniss zusammengefasst sind [V. D. McGinniss in Encyclopedia of Polymer Science and Engineering, H. F. Mark, N. M. Bikales, C. G. Overberger, G. Menges (Hrsg.), 2. Aufl., 1986, Wiley, New York, Bd. 4, S. 418ff]. Diese Strahlungsformen sind bevorzugt erfindungsgemäß einsetzbar.
Durch die erfindungsgemäße Verwendung der hier beschriebenen neuartigen Formulierungen in Kombination mit dem hier beschriebenen Verfahren werden vorteilhaft vernetzte Haftklebemassen gewonnen. Die funktionalisierten Füllstoffpartikel B wirken dabei als multifunktionelle Vernetzer. Durch ihr Vermögen, mehrere Polymerketten in einem Vernetzungspunkt zu verknüpfen, ist es möglich, die Molmasse der zu vernetzenden polymeren Bestandteile der Haftklebemasse zu reduzieren (von polymeren Bestandteilen für die Haftklebemasse auszugehen, die - bezogen auf übliche Verfahren nach dem Stand der Technik - eine reduzierte Molmasse aufweisen). Es folgt eine Verbesserung des Verarbeitungsverhaltens. Umgekehrt ist es im Sinne dieser Erfindung auch möglich, Haftklebemassen, die vernetzbare Polymere geringer Molmasse enthalten, mit den erfindungsgemäßen Füllstoffpartikeln zu versetzen. Nach Einwirken elektromagnetischer Strahlung, von Partikelstrahlung und/oder thermischer Energie erhält man andere Netzwerkstrukturen, als wenn die erfindungsgemäßen Füllstoffpartikel nicht zugegen wären. Dieser neuartige Vernetzungszustand zeichnet sich dadurch aus, dass mit ihm verbesserte Produkteigenschaften, insbesondere eine gesteigerte Kohäsion der Haftklebemasse korreliert sind. Typischerweise ist es charakteristisch für den neuartigen Vernetzungszustand, dass die adhäsiven Eigenschaften der erfindungsgemäßen Haftklebemassen zumindest auf dem Niveau liegen, auf dem auch eine vernetzte Haftklebemasse liegt, die keine erfindungsgemäßen Füllstoffpartikel enthält, aber vergleichbar prozessiert wurde und einen vergleichbaren Gelanteil aufweist.

Vorteilhaft geht man vor, indem die erfindungsgemäßen Haftklebemassenformulierungen, die zumindest eine Sorte eines erfindungsgemäßen Polymers A und zumindest eine Sorte eines funktionalisierten Füllstoffpartikels B enthalten, im Rohzustand, also vor Beginn des Prozessierens, gute Verarbeitungseigenschaften aufweisen. Als Verarbeitungseigenschaften seien im Sinne dieser Erfindung insbesondere die Viskosität der Haftklebemassenformulierung sowie ihre Elastizität gemeint. Die Viskosität wird als Nullviskosität η₀ für verschiedene Temperaturen angegeben. Sie kann aus kapillarviskosimetrisch bestimmten Viskositätskurven erhalten werden. Die Elastizität wird in Form der ersten Normalspannungsdifferenz N₁ angegeben, ebenfalls bei verschiedenen Temperaturen. Auch die Daten zur ersten Normalspannungsdifferenz können aus kapillarviskosimetrischen Experimenten erhalten werden. Beide Größen, die Viskosität und die erste Normalspannungsdifferenz, sind im Allgemeinen für Haftklebemassenformulierungen scherratenabhängig. Je nach Prozess und den darin auftretenden Scherraten können sie also für eine gegebene Haftklebemasseformulierung variieren. Es ist für die Beschreibung dieser Erfindung sinnvoll, sich auf eine Scherrate zu beschränken, ohne jedoch damit die erfindungsgemäß einsetzbaren Verfahren diesbezüglich einzuschränken. Als eine solche Scherrate wird die Scherrate von 1000 s⁻¹ als repräsentativer vorteilhafter Wert ausgewählt. Für die Verarbeitbarkeit und insbesondere die Beschichtbarkeit ist es sehr von Vorteil, wenn ein bestimmtes Verhältnis aus Elastizität und Viskosität bei der durch den Prozess vorgegebenen Scherrate nicht überschritten wird. Ist dieses Verhältnis zu hoch, überwiegt der elastische Charakter des zu beschichtenden Materials. In Folge dessen kann Schmelzebruch auftreten, was sich in einem inhomogenen Strichbild äußert (M. Pahl, W. Gleißle, H.-M. Laun, Praktische Rheologie der Kunststoffe und Elastomere, 4. Aufl., 1995, VDI Verlag, Düsseldorf, S. 191f).

Erkenntnissen der kapillarviskosimetrischen Rheologie entsprechend bestimmt das Verhältnis R = N₁/τ aus erster Normalspannungsdifferenz N₁ und der Schubspannung τ das Verarbeitungsverhalten einer Polymerschmelze [W. Gleißle, Rheol. Acta, 1982, 21, 484 - 487; M. Pahl, W. Gleißle, H.-M. Laun, Praktische Rheologie der Kunststoffe und Elastomere, 4. Aufl., 1995, VDI Verlag, Düsseldorf, S. 320ff]. Die Schubspannung τ ist dabei als Produkt aus Viskosität und Scherrate gegeben. Der Zähler des Quotienten N₁/τ beschreibt also die elastischen Eigenschaften des Materials, der Nenner die viskosen. Letzterer führt zudem die Abhängigkeit von der Prozessgeschwindigkeit in Form der Scherrate vor Augen. Oberhalb eines kritischen Wertes für R treten Fließanomalien auf. Gelingt es also, bei den Scherraten, die während der Verarbeitung vorherrschen, N₁ durch ein Materialkonzept zu reduzieren oder zumindest nicht weiter durch zusätzliche Vernetzungseinflüsse anwachsen zu lassen, dann wird erwartet, dass sich das Material ohne Schmelzeinhomogenitäten beschichten lässt. Dies kann beispielsweise derart erfolgen, dass eine Vernetzung erst nach der Beschichtung initiiert wird, wie es beispielsweise bei einer strahlenchemischen Behandlung möglich ist. Das bestrahlte und damit vernetzte Material weist eine erhöhte Elastizität und damit verbunden eine höhere erste Normalspannungsdifferenz auf und könnte in diesem Zustand nicht mit gutem Beschichtungsbild verarbeitet werden. Die nichtvernetzte Schmelze jedoch ist weniger elastisch, zeigt eine geringere erste Normalspannungsdifferenz und lässt sich erfolgreich beschichten. Für Haftklebemassen mit guter Kohäsion werden häufig Polymere mit hohen Molmassen benötigt. Diese können allerdings durch intermolekulare Wechselwirkungen, wie Verschlaufungen, bereits im chemisch unvernetzten Zustand hohe Elastizitäten aufweisen, was zu Nachteilen im Beschichtungsverhalten führen kann.

Das neuartige erfindungsgemäße Konzept umfasst, dass die Kohäsion der erfindungsgemäßen Haftklebemasse im Wesentlichen durch einen verbesserten Vernetzungszustand über chemische Verknüpfung von Polymeren an Füllstoffoberflächen erfolgt. Daher ist eine hohe Molmasse der Polymere nicht mehr zwingend erforderlich und das Beschichtungsverhalten in Folge dessen in nicht mehr so ausgeprägtem Maße durch Kettenverschlaufungen eingeschränkt. Die Partikel selbst liegen während des Prozessierens als disperse Phase in der Haftklebemassenformulierung vor. Da sie zu diesem Zeitpunkt noch nicht chemisch mit polymeren Bestandteilen der Formulierung verknüpft sind, tragen sie zu diesem Zeitpunkt nur unvollständig zur Elastizität der Formulierung bei. Erst bei Initiierung der Vernetzungsreaktion während und/oder nach der Beschichtung wird die gewünschte Kohäsion erzeugt. Die Anforderungen an die erfindungsgemäßen Haftklebemasseformulierungen lauten damit, dass sich die Formulierung im nichtvernetzten Zustand durch eine gute Verarbeitbarkeit, gegeben beispielsweise durch eine niedrige erste Normalspannungsdifferenz, und insbesondere das Verhältnis R, sowie im vernetzten Zustand eine gute Kohäsion, gegeben beispielsweise durch die Scherstandzeit oder den Gelanteil eines Selbstklebebandprüfkörpers, auszeichnen muss.

Vorteilhafte erfindungsgemäße Haftklebemassen, die über den erfindungsgemäßen Beschichtungs- und Vernetzungsprozess gewonnen werden, weisen im Vergleich zu einer Formulierung, die genauso beschichtet und vernetzt wurde, jedoch keine erfindungsgemäßen Füllstoffpartikel enthält, aber einen vergleichbaren Gelanteil aufweist (Test B), typischerweise eine um mindestens 50 %, bevorzugt um mindestens 100 % gesteigerte Scherstandzeit nach Test D auf. Die Adhäsion, gegeben durch die Klebkraft nach Test C, ist für das erfindungsgemäße Haftklebemassensystem typischerweise mindestens auf dem gleichen Niveau, auf dem auch die Adhäsion des zuvor genannten Referenzsystems liegt, oder liegt bevorzugt sogar um mindestens 25 % höher. Gleichzeitig erhöht sich der R-Wert der erfindungsgemäßen Haftklebemasse im unvernetzten Zustand bei einer materialspezifisch geeigneten Temperatur zwischen 25 °C und 300 °C, ebenfalls im Vergleich zu einer Formulierung, die keine erfindungsgemäßen Füllstoffpartikel enthält und auch unvernetzt ist, kaum und bleibt bei Werten von bevorzugt höchstens R = 3,5 (Test A2). Die Viskosität der erfindungsgemäßen Haftklebemassen liegt bei derselben Temperatur nicht oder nur wenig, und zwar bis bevorzugt höchstens 25 %, höher als die einer Formulierung, die keine erfindungsgemäßen Füllstoffpartikel enthält und auch unvernetzt ist (Test A1).

### Zusammensetzung erfindungsgemäßer Haftklebemassenformulierungen

Die erfindungsgemäßen Haftklebemassenformulierungen enthalten zumindest eine Polymersorte A und zumindest eine Füllstoffpartikelsorte B, wobei sich die zumindest eine Polymersorte A über in ihr vorhandene Gruppen Y mit Gruppen X, die sich auf der Oberfläche der zumindest einen Füllstoffpartikelsorte B befinden, durch Einwirken elektromagnetischer Strahlung, von Partikelstrahlung und/oder thermischer Energie während und/oder nach einer Beschichtung verbinden kann. Die erfindungsgemäße Haftklebemasse kann optional weitere Bestandteile außer Polymeren A und Füllstoffpartikeln B enthalten. In diesem Abschnitt soll auf die erfindungsgemäßen Polymere A, die erfindungsgemäßen Füllstoffe B und weitere in den erfindungsgemäßen Haftklebemasseformulierungen optional einsetzbare Bestandteile eingegangen werden sowie die Art der Gruppen X und Y beschrieben werden.

Die erfindungsgemäßen Haftklebemassen enthalten vorteilhaft bis zu 50 Gew.-% zumindest einer Füllstoffpartikelsorte B, bevorzugt bis zu 20 Gew.-%, sehr bevorzugt bis zu 12 Gew.-%.

### Polymere A

Die zumindest eine Polymersorte A ist dann bevorzugt erfindungsgemäß, wenn sie eine Molmasse von nicht mehr als 10.000.000 g/mol, bevorzugt nicht mehr als 500.000 g/mol aufweist. Ferner weist die zumindest eine Polymersorte A bevorzugt eine Erweichungstemperatur von kleiner als 100 °C auf, besonders bevorzugt kleiner als 20 °C. Die zumindest eine Polymersorte A kann von linearer, verzweigter, sternförmiger oder gepfropfter Struktur sein, um nur einige Beispiele zu geben, und als Homopolymer oder statistisches Copolymer aufgebaut sein. Die Bezeichnung "statistisches Copolymer" beinhaltet im Sinne dieser Erfindung nicht nur solche Copolymere, in denen die bei der Polymerisation eingesetzten Comonomere rein statistisch eingebaut sind, sondern auch solche, bei denen Gradienten in der Comonomerzusammensetzung und/oder lokale Anreicherungen einzelner Comonomersorten in den Polymerketten vorkommen.

Als Molmasse ist in diesem Zusammenhang das Gewichtsmittel der Molmassenverteilung, wie sie beispielsweise über gelpermeationschromatographische Untersuchungen zugänglich ist, zu verstehen. Unter Erweichungstemperatur sei in diesem Zusammenhang die Glasübergangstemperatur für amorphe Systeme und die Schmelztemperatur für semikristalline Systeme verstanden, die beispielsweise durch die dynamische Differentialkalorimetrie (DSC) bestimmt werden können. Sind Zahlenwerte für Erweichungstemperaturen angegeben, dann beziehen sich diese bei amorphen Systemen auf die Mittelpunktstemperatur der Glasstufe und bei semikristallinen Systemen auf die Temperatur bei maximaler Wärmetönung während des Phasenübergangs.

Es ist zudem im Sinne dieser Erfindung möglich, dass es sich bei der zumindest einen Polymersorte A um ein Blockcopolymer handelt. Vorteilhaft sind insbesondere solche Blockcopolymere, bei denen bevorzugt jeder der vorkommenden Blöcke (unabhängig voneinander) eine Molmasse von kleiner als 1.000.000 g/mol, bevorzugt kleiner als 250.000 g/mol aufweist, von linearer, verzweigter, sternförmiger oder gepfropfter Struktur ist und/oder als Homopolymer oder statistisches Copolymer aufgebaut ist. Ferner vorteilhaft weist zumindest eine Blocksorte eine Erweichungstemperatur von kleiner als 100 °C auf, bevorzugt kleiner als 20 °C. Die einzelnen im Blockcopolymer vorkommenden Blocksorten können sich im Hinblick auf die Comonomerzusammensetzung und optional in ihrer Molmasse und/oder Erweichungstemperatur und/oder Struktur (z. B. linearer oder verzweigter Art) unterscheiden. Die verschiedenen Polymerarme in sternförmigen und gepfropften Systemen können von verschiedener chemischer Natur sein, also aus unterschiedlichen Monomeren bestehen oder/und unterschiedliche Comonomerzusammensetzung aufweisen.

Polymere der Sorte A sind weiterhin dann erfindungsgemäß bevorzugt, wenn sie zumindest eine Sorte an Gruppen Y enthalten, die mit Gruppen X, die sich auf der Oberfläche der zumindest einen Füllstoffpartikelsorte B befinden, unter Einwirken elektromagnetischer Strahlung, von Partikelstrahlung und/oder thermischer Energie während oder nach einer Beschichtung eine Verbindung eingehen können. Die Gruppen der zumindest einen Sorte Y können auf vielfältige Weise in der zumindest einen Polymersorte A vorhanden sein. Die zumindest eine Polymersorte A kann beispielsweise als Homopolymer aus Monomeren, die die zumindest eine Sorte an Gruppen Y enthalten, aufgebaut sein. Ferner kann die zumindest eine Polymersorte A auch als statistisches Copolymer aufgebaut sein, das zumindest aus einer Sorte an Monomeren, die die zumindest eine Sorte an Gruppen Y enthalten, und optional einer oder mehrerer Sorten an Monomeren, die keine derartigen Gruppen enthalten, erhalten wird. Es ist weiterhin möglich, dass die zumindest eine Polymersorte A die zumindest eine Sorte an Gruppen Y lediglich an einzelnen Punkten entlang des Polymergerüsts enthält. Beispiele für solche Ausführungsformen beinhalten Gruppen, die sich an Kettenenden, im Bereich von Ketten- oder Blockmittelpunkten, im Bereich von Verzweigungspunkten oder im Bereich von Blockverbindungspunkten befinden. Polymere der zumindest einen Sorte A sind dann erfindungsgemäß besonders bevorzugt, wenn das Polymermolekül im Mittel wenigstens zwei solcher Gruppen enthält. Es ist außerdem möglich, dass die zumindest zwei Gruppen Y über eine Pfropfreaktion in das zumindest eine Polymer A eingebracht werden. Es ist ebenfalls erfindungsgemäß, die zumindest zwei Gruppen Y in die zumindest eine Polymersorte A einzubringen, indem eine polymeranaloge Reaktion durchgeführt wird. Es sind zudem beliebige Kombinationen aus den genannten Funktionalisierungsarten erfindungsgemäß.

Als Beispiele für Polymere A, aber ohne eine Einschränkung vornehmen zu wollen, seien als vorteilhaft im Sinne dieser Erfindung die folgenden Homopolymere und statistischen Copolymere genannt: Polyether, wie z. B. Polyethylenglykol, Polypropylenglykol oder Polytetrahydrofuran, Polydiene, wie z. B. Polybutadien oder Polyisopren, hydrierte Polydiene, wie z. B. Polyethylenbutylen oder Polyethylenpropylen, Kautschuke, wie z. B. Naturkautschuk, Nitril-Kautschuk oder Chloropren-Kautschuk, butadienhaltiger Kautschuk, isoprenhaltiger Kautschuk, Polyisobutylen, Polyolefine, wie z. B. Ethylenhomopolymere oder -copolymere, Propylenhomopolymere oder -copolymere, metallocenkatalysierte Polyolefine, Polysiloxane, Polyalkylvinylether, Polymere unfunktionalisierter α,β-ungesättigter Ester, Copolymere auf Basis α,β- ungesättigter Ester, Copolymere auf Basis von Alkylvinylethern sowie Ethylenvinylacetat-Copolymere, EPDM-Kautschuke und StyrolButadien-Kautschuke genannt. Weitere vorteilhaft einsetzbare statistische Copolymere werden durch Copolymerisation von Isopren und/oder Butadien erhalten, weisen 1,4-, 1,2-und/oder 3,4- bzw. 1,4- und/oder 1,2-Einbau der Monomere in die Polymerkette auf und können vollständig oder partiell hydriert vorliegen.

Besonders vorteilhaft im Sinne dieser Erfindung sind statistische Copolymere auf Basis von unfunktionalisierten α,β-ungesättigten Estern einsetzbar. Werden diese für die zumindest eine Polymersorte A mit Copolymercharakter verwendet, dann können als Monomere bei ihrer Herstellung vorteilhaft prinzipiell alle dem Fachmann geläufigen Verbindungen, die sich zur Synthese von Polymeren eignen, eingesetzt werden. Bevorzugt werden α,β-ungesättigte Alkylester der allgemeinen Struktur

CH₂=CH(R¹)(COOR²) (I)

verwendet, wobei R¹ = H oder CH₃ und R² = H oder lineare, verzweigte oder ringförmige, gesättigte oder ungesättigte Alkylreste mit 1 bis 30, insbesondere mit 4 bis 18 Kohlenstoffatomen darstellt.

Monomere, die sehr bevorzugt im Sinne der allgemeinen Struktur I für Polymere A mit Copolymercharakter eingesetzt werden, umfassen Acryl- und Methacrylsäureester mit Alkylgruppen bestehend aus 4 bis 18 C-Atomen. Spezifische Beispiele für entsprechende Verbindungen sind, ohne sich durch diese Aufzählung einschränken zu wollen, n-Butylacrylat, n-Butylmethacrylat, n-Pentylacrylat, n-Pentylmethacrylat, n-Hexylacrylat, n-Hexylmethacrylat, n-Heptylacrylat, n-Heptylmethacrylat, n-Octylacrylat, n-Octylmethacrylat, n-Nonylacrylat, n-Nonylmethacrylat, n-Decylacrylat, n-Decylmethacrylat, Dodecylacrylat, Dodecylmethacrylat, Hexadecylacrylat, Hexadecylmethacrylat, Octadecylacrylat, Octadecylmethacrylat, deren verzweigte Isomere, wie z. B. sec-Butylacrylat, sec-Butylmethacrylat, tert-Butylacrylat, tert-Butylmethacrylat, 2-Ethylhexylacrylat, 2-Ethylhexylmethacrylat und iso-Octylacrylat sowie cyclische Monomere wie z. B. Cyclohexylacrylat, Cyclohexylmethacrylat, Norbornylacrylat, Norbornylmethacrylat, Isobornylacrylat und Isobornylmethacrylat.

Ebenfalls einsetzbar als Monomere für Polymere A mit Copolymercharakter sind Acryl- und Methacrylsäureester, die aromatische Reste enthalten, wie z. B. Phenylacrylat, Benzylacrylat, Benzoinacrylat, Phenylmethacrylat, Benzylmethacrylat oder Benzoinmethacrylat.

Ferner können ethoxylierte und propoxylierte Acrylate und Methacrylate erfindungsgemäß eingesetzt werden. In solchen Systemen besteht die Acrylat- oder Methacrylatseitenkette formal aus einem Oligomer oder Polymer des Ethylenoxids oder Propylenoxids.

Weiterhin können optional Vinylmonomere aus den folgenden Gruppen eingesetzt werden: Vinylester, Vinylether, Vinylhalogenide, Vinylidenhalogenide, sowie Vinylverbindungen, die aromatische Zyklen und Heterozyklen in α-Stellung enthalten. Für die optional einsetzbaren Vinylmonomere seien beispielhaft ausgewählte erfindungsgemäß einsetzbare Monomere genannt: Vinylacetat, Vinylformamid, Vinylpyridin, Ethylvinylether, 2-Ethylhexylvinylether, Butylvinylether, Vinylchlorid, Vinylidenchlorid, Acrylnitril, Styrol, α-Methylstyrol.

In einer bevorzugten Auslegungsform dieser Erfindung enthält die zumindest eine Polymersorte A ihre zumindest zwei Gruppen Y in Form zumindest eines speziellen Comonomers, das während der Polymerisation des Polymers statistisch copolymerisiert wurde. Dabei liegt der Stoffmengenanteil dieses zumindest einen speziellen Comonomers in Bezug auf die Zusammensetzung des Gesamtmonomergemischs bei der Herstellung des Gesamtpolymers bei bis zu 50 Gew.-%, bevorzugt bei bis zu 20 Gew.-%, sehr bevorzugt bei bis zu 5 Gew.-%. Der spezielle Charakter dieses zumindest einen Comonomers zeigt sich darin, dass es zumindest eine Gruppe Y trägt, die mit zumindest einer Gruppe X, die sich auf der Oberfläche der zumindest einen Füllstoffpartikelsorte B befindet, unter Einwirken elektromagnetischer Strahlung, von Partikelstrahlung und/oder thermischer Energie während oder nach einer Beschichtung eine Verbindung eingehen kann. Beispiele für Gruppen X und Y sind im Abschnitt "Kombinationen von Gruppen X und Y" beschrieben. Besonders bevorzugt werden Monomere auf Basis von α,β-ungesättigten Estern, die diese Gruppen enthalten, eingesetzt. Es ist auch möglich, dass Gruppen Y über eine polymeranaloge Reaktion mit dem Polymer A an den Stellen, an denen diese speziellen Comonomere eingebaut sind, verbunden werden. Es ist ferner möglich, dass diese speziellen Comonomere vor der Polymerisation mit Gruppen Y derivatisiert werden, d. h. dass Comonomere mit nicht notwendigerweise erfindungsgemäßer Funktionalisierung vor der Polymerisation und damit Herstellung einer Polymersorte vom Typ A mit einer chemischen Baueinheit modifiziert wird, über die zumindest eine erfindungsgemäße Gruppe Y in das Comonomer eingebaut wird und nach dieser Modifikationsreaktion und anschließenden Polymerisation für die Ausbildung einer Verknüpfung auf erfindungsgemäße Weise mit zumindest einer Gruppe X zur Verfügung steht.

Als Beispiele für Comonomere, die funktionelle Gruppen tragen, seien - ohne sich einschränken zu wollen - Allylacrylat, Allylmethacrylat, Tetrahydrofurfurylacrylat, Tetrahydrofurfurylmethacrylat, 2-Hydroxyethylacrylat, 2-Hydroxyethylmethacrylat, 3-Hydroxy-propylacrylat, 3-Hydroxypropylmethacrylat, 4-Hydroxybutylacrylat, 4-Hydroxybutylmeth-acrylat, Glycidylacrylat, Glycidylmethacrylat, acryliertes Benzophenon, methacryliertes Benzophenon, Crotonsäure, Maleinsäure, Maleinsäureanhydrid, Itaconsäure, Itaconsäureanhydrid, 2-Dimethylaminoethylacrylat, 2-Dimethylaminoethylmethacrylat, 3-Dimethylaminopropylacrylat, 3-Dimethylaminopropylmethacrylat, N-tert-Butylacrylamid, N-tert-Butylmethacrylamid, N-iso-Propylacrylamid, N-iso-Propylmethacrylamid, Acrylamid, Methacrylamid, N-Methylolacrylamid, N-Methylolmethacrylamid, Acrylsäure, Methacrylsäure, Vinylalkohol, 2-Hydroxyethylvinylether, 3-Hydroxypropylvinylether, 4-Hydroxybutylvinylether und Allylglycidylether genannt.

Stellt die zumindest eine Polymersorte A ein Blockcopolymer dar, dann liegen im einfachsten Fall Diblockcopolymere der Form PA-PA' bestehend aus einem Block PA und einem Block PA', die sich in Bezug auf die ausgewählten Ausgangsmonomere unterscheiden und optional in ihrer Erweichungstemperatur und/oder Molmasse und/oder Struktur (z. B. linearer oder verzweigter Art) verschieden sein können, vor. Weitere Ausführungsformen für Polymere A mit Blockcopolymercharakter sind, ohne sich einschränken zu wollen, Triblockcopolymere der Art PA-PA'-PA", Blockcopolymere der Art PA-PA'-PA"-PA'" sowie höhere Blockcopolymere, deren Strukturen diese Reihe fortführen. Triblockcopolymere und höhere Blockcopolymere sind dann erfindungsgemäß im Sinne der Polymere A mit Blockcopolymercharakter, wenn sich alle direkt miteinander verknüpften Blöcke in Bezug auf die ausgewählten Ausgangsmonomere sowie optional in ihrer Molmasse und/oder Erweichungstemperatur und/oder Struktur (z. B. linearer oder verzweigter Art) unterscheiden. Ferner sind Triblockcopolymere und höhere Blockcopolymere erfindungsgemäß im Sinne der Polymere A, wenn sich mehrere der nicht direkt miteinander verknüpften Blöcke in Bezug auf die ausgewählten Ausgangsmonomere sowie optional in ihrer Molmasse und/oder Erweichungstemperatur und/oder Struktur (z. B. linearer oder verzweigter Art) nicht voneinander unterscheiden. Eine bevorzugte Auslegung eines Polymers A mit Blockcopolymercharakter ist ein Triblockcopolymer der Art PA-PA'-PA", wobei PA und PA" in Bezug auf die ausgewählten Ausgangsmonomere, Molmasse, Erweichungstemperatur und Struktur gleich sind. Die Blockverknüpfung in Polymeren A mit Blockcopolymercharakter kann in einer linearen Form vorliegen, aber auch in einer sternförmigen Ausführung oder als Pfropfcopolymervariante. Jeder einzelne Block kann als Homopolymerblock oder Copolymerblock aufgebaut sein. Damit gelten für die Blöcke die Definitionen, wie sie im Abschnitt "Homopolymere" und "statistische Copolymere" ausgeführt sind.

Kommt als Polymer A ein Blockcopolymer zur Anwendung, dann enthält bevorzugt zumindest eine Blocksorte Funktionalisierungen vom Typ Y. Besonders bevorzugt sind Diblockcopolymere, die in nur einer Blocksorte Funktionalisierungen vom Typ Y enthalten, symmetrische Triblockcopolymere, die nur in beiden Endblöcken Funktionalisierungen vom Typ Y enthalten und Triblockcopolymere, die nur im Mittelblock Funktionalitäten vom Typ Y enthalten.

### Füllstoffpartikel B

Als die zumindest eine Füllstoffpartikelsorte B kommen im Sinne dieser Erfindung bevorzugt solche Füllstoffpartikel zur Anwendung, bei denen die Basiseinheiten ohne Oberflächenmodifikationen Erweichungstemperaturen von größer als 200 °C aufweisen, bevorzugt von größer als 500 °C. Es sind außerdem solche Systeme, deren Erweichungstemperatur (bezogen auf die nicht modifizierten Basiseinheiten) oberhalb der Zersetzungstemperatur liegt, dann erfindungsgemäß, wenn die Zersetzungstemperatur oberhalb 200 °C liegt, bevorzugt oberhalb 500 °C.

Die Materialien, auf denen die Basiseinheit der zumindest einen Füllstoffpartikelsorte B basiert, können anorganischer Natur sein oder ein anorganisch/organisches Hybridmaterial sein und einen amorphen, teilkristallinen oder kristallinen Charakter aufweisen. Auch sind Basiseinheiten organischer Natur im erfindungsgemäßen Sinne einsetzbar.

Die Füllstoffpartikel können in ihrer Struktur bevorzugt kugelförmig, stäbchenförmig oder plättchenförmig vorliegen. Separierte Partikel, oftmals auch Primärpartikel genannt, sind dabei ebenso erfindungsgemäß wie aus mehreren Primärpartikeln gebildete Aggregate. Solche Systeme zeigen oft eine fraktale Überstruktur. Werden die Partikel aus Kristalliten gebildet, dann hängt die Primärpartikelform von der Art des Kristallgitters ab. Plättchenförmige Systeme können auch in Form von Schichtstapeln vorliegen.

In einer vorteilhaften Ausführungsform dieser Erfindung liegt die zumindest eine funktionalisierte Füllstoffsorte in der Haftklebemasse im Wesentlichen in Form von singulären kugelförmigen Partikeln vor. Die Partikeldurchmesser weisen dann Werte von kleiner als 500 nm, bevorzugt von kleiner als 100 nm, sehr bevorzugt von kleiner 25 nm auf. In einer weiteren vorteilhaften Auslegung dieser Erfindung liegt die zumindest eine funktionalisierte Füllstoffsorte in der Haftklebemasse im Wesentlichen in Form von singulären plättchenförmigen Partikeln vor. Die Schichtdicke solcher Plättchen weist dann Werte von bevorzugt kleiner als 10 nm und einen größten Durchmesser von bevorzugt kleiner als 1000 nm auf. In einer weiteren vorteilhaften Auslegung dieser Erfindung liegt die zumindest eine Füllstoffsorte in der Haftklebemasse im Wesentlichen in Form von singulären stäbchenförmigen Partikeln vor. In diesem Fall weisen diese Stäbchen einen Durchmesser von kleiner als 100 nm und eine Länge von kleiner als 15 µm auf. Die Stäbchen können auch gekrümmt vorliegen und/oder flexibel sein. Weiterhin ist es im Sinne dieser Erfindung vorteilhaft möglich, dass die zumindest eine Füllstoffsorte in der Haftklebemasse in Form von Primärpartikelaggregaten vorliegt. Diese Aggregate weisen einen Gyrationsradius (zu verstehen analog dem von Polymeren bekannten Terminus "Gyrationsradius") von kleiner als 1000 nm, bevorzugt von kleiner als 250 nm auf. Besonders bevorzugt werden solche Füllstoffpartikel im Sinne dieser Erfindung eingesetzt, deren räumliche Ausdehnung in zumindest einer Richtung kleiner als 250 nm ist, bevorzugt kleiner als 100 nm, sehr bevorzugt kleiner als 50 nm. Es ist außerdem im Sinne dieser Erfindung möglich, Kombinationen aus den zuvor genannten Füllstoffarten einzusetzen.

Typische und erfindungsgemäß vorteilhafte Verbindungsklassen, aus denen die Basiseinheit der zumindest einen Füllstoffpartikelsorte B besteht, sind Oxide anorganischer Natur - insbesondere Metalloxide und/oder Halbmetalloxide -, Salze der Erdalkalimetalle sowie Minerale auf Silikatbasis, insbesondere Tonminerale und Tone. Zu den erfindungsgemäß einsetzbaren amorphen oder kristallinen Metalloxiden zählen zum Beispiel Siliziumdioxid, Aluminiumoxid, Titandioxid, Zirkoniumdioxid und Zinkoxid. Dem Fachmann sind weitere Systeme geläufig, die ebenso erfindungsgemäß eingesetzt werden können. Erdalkalimetallsalze umfassen beispielsweise Carbonate, Sulfate, Hydroxide, Phosphate und Hydrogenphosphate des Magnesiums, des Calciums, des Strontiums und des Bariums. Zu den erfindungsgemäß einsetzbaren Tonmineralen und Tonen zählen insbesondere silikatische Systeme wie Serpentine, Kaoline, Talkum, Pyrophyllit, Smectite wie insbesondere Montmorillonit, Vermiculite, Illite, Glimmer, Sprödglimmer, Chlorite, Sepiolith und Palygorskit. Weiterhin können synthetische Tonminerale wie Hectorite sowie deren verwandte Systeme wie z. B. Laponite ® der Fa. Laporte und Fluorhectorite sowie deren verwandte Systeme wie z. B. Somasif ® der Fa. Co-Op erfindungsgemäß eingesetzt werden.

Die zumindest eine Füllstoffpartikelsorte B liegt oberflächenmodifiziert vor. Typische und erfindungsgemäß vorteilhafte Oberflächenmodifikationsreagenzien sind Organosilane und Tenside, aber auch Organotitan-Verbindungen, Fettsäuren oder Polyelektrolyte wie beispielsweise kurzkettige Polymere mit hohem Acrylsäureanteil. Die Funktion dieser Oberflächenmodifikationsreagenzien besteht vor allem darin, Kompatibilität der Partikeloberfläche mit der Matrix, in der sie dispergiert werden sollen, zu schaffen. Als weitere Aufgabe werden Oberflächenmodifikationsreagenzien eingesetzt, um Zusammenlagerungen kleinerer Partikel zu größeren Objekten zu verhindern. Sehr vorteilhaft im erfindungsgemäßen Sinne wird zumindest eine Sorte an Oberflächenmodifikationsreagenzien eingesetzt, die zusätzlich zu der kompatibilisierenden und aggregationsverhindernden Funktion auch die Möglichkeit bietet, über zumindest eine Gruppe X, die in der zumindest einen Sorte des Oberflächenmodifikationsreagenzes eingebaut ist, eine Verbindung mit zumindest einer Gruppe Y, die in zumindest einer Polymersorte A enthalten ist, unter Einwirkung elektromagnetischer Strahlung, von Partikelstrahlung und/oder thermischer Energie während oder nach einer Beschichtung einzugehen. Ein Füllstoffpartikel trägt an seiner Oberfläche bevorzugt mindestens 10 Gruppen der zumindest einen Sorte X, mehr bevorzugt mindestens 50.

Füllstoffpartikel, die in ihrer nativen Form (in Form der nicht oberflächenmodifizierten Basiseinheit) an der Oberfläche Hydroxid-Gruppen enthalten, bieten bevorzugt die Möglichkeit einer Reaktion mit Chlorsilanen oder Alkoxysilanen. Im Anschluss an eine Hydrolyse des Silans findet eine Kondensation von Silanol-Gruppen mit den Hydroxid-Gruppen auf der Partikeloberfläche statt. Stellt zumindest ein Substituent am zentralen Silizium-Atom des Silans einen organischen Rest dar, wird bei kompletter Oberflächenbedeckung mit Silan-Molekülen auf diese Weise ein organophiler Mantel kovalent mit dem Füllstoffpartikel verknüpft und damit die Partikel polymermatrixkompatibel ausgestattet. Die Konzepte und typischerweise verwendete Materialklassen, die im Sinne dieser Erfindung eingesetzt werden können, werden z. B. von R. N. Rothon beschrieben [R. N. Rothon (Hrsg.), "Particulate-Filled Polymer Composites", 2. Aufl., 2003, Rapra Technology, Shawbury, 153-206].

Zwei Klassen an Silanen können im Sinne dieser Erfindung insbesondere unterschieden werden, zum einen solche, die neben den Gruppen, die zu einer Reaktion mit der Basisoberfläche befähigt sind, ausschließlich organische Reste tragen, die chemisch inert sind (siehe Struktur II), zum anderen solche, die neben den Gruppen, die zu einer Reaktion mit der Basisoberfläche befähigt sind, zumindest einen organischen Rest enthalten, der zumindest eine Gruppe X trägt, die eine Verbindung mit zumindest einer Gruppe Y, die in zumindest einer Polymersorte A enthalten ist, unter Einwirkung elektromagnetischer Strahlung, von Partikelstrahlung und/oder thermischer Energie während oder nach einer Beschichtung eingehen kann (siehe Struktur III). In Silan II stellt zumindest einer der Substituenten A, B, D eine hydrolysierbare Gruppe dar, also zum Beispiel ein Chlor-Atom oder eine Alkoxygruppe. Zumindest einer der Substituenten B, C, D stellt einen organischen Rest dar, der aus einem linearen, verzweigten oder ringförmigen Kohlenwasserstoff besteht, der auch aromatisch sein kann und niedermolekularer, oligomerer oder polymerer Natur. Ist mehr als eine hydrolysierbare Gruppe unter den Substituenten A, B, D vorhanden, dann können diese gleicher oder verschiedener chemischer Natur sein, wobei alle der obigen Definition für hydrolysierbare Gruppen entsprechen. Ist mehr als ein organischer Rest unter den Substituenten B, C, D, dann können diese ebenfalls gleicher oder verschiedener chemischer Natur sein, wobei alle der obigen Definition für organische Reste entsprechen. In Silan III stellt zumindest einer der Substituenten A, E, F eine hydrolysierbare Gruppe dar, also zum Beispiel ein Chlor-Atom oder eine Alkoxygruppe. Zumindest einer der Substituenten E, F, G stellt einen organischen Rest dar, der aus einem linearen, verzweigten oder ringförmigen Kohlenwasserstoff besteht, der auch aromatisch sein kann und niedermolekularer, oligomerer oder polymerer Natur und der zusätzlich zumindest eine Gruppe X enthält, die eine Verbindung mit zumindest einer Gruppe Y, die in zumindest einer Polymersorte A enthalten ist, unter Einwirkung elektromagnetischer Strahlung, von Partikelstrahlung und/oder thermischer Energie während oder nach einer Beschichtung eingehen kann. Ist mehr als eine hydrolysierbare Gruppe unter den Substituenten A, E, F vorhanden, dann können diese gleicher oder verschiedener chemischer Natur sein. Ist mehr als ein organischer Rest unter den Substituenten E, F, G vorhanden, dann können diese ebenfalls gleicher oder verschiedener chemischer Natur sein, wobei alle der obigen Definition für organische Reste entsprechen.

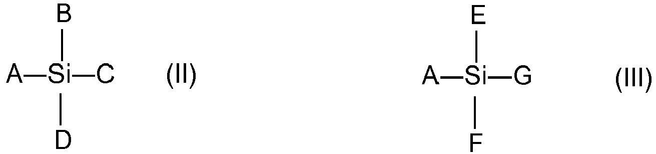

Vorteilhafte Auslegungen erfindungsgemäß einsetzbarer Silane der Struktur II sind solche, bei denen lediglich A als hydrolysierbare Gruppe zum Einsatz kommt und B, C, D organische Reste sind, von denen B und D gleicher chemischer Natur und C anderer chemischer Natur ist. Weitere vorteilhafte Ausgestaltungen erfindungsgemäß einsetzbarer Silane der Struktur II sind solche, bei denen A und B als hydrolysierbare Gruppen gleicher chemischer Natur zum Einsatz kommen und C und D organische Reste sind, die gleicher chemischer Natur sind. Weitere vorteilhafte Ausgestaltungen erfindungsgemäß einsetzbarer Silane der Struktur II sind solche, bei denen A, B, D als hydrolysierbare Gruppen gleicher chemischer Natur zum Einsatz kommen und C ein organischer Rest ist.

Vorteilhafte Ausgestaltungen erfindungsgemäß einsetzbarer Silane der Struktur III sind solche, bei denen lediglich A als hydrolysierbare Gruppe zum Einsatz kommt und E, F, G organische Reste sind, von denen E und F gleicher chemischer Natur sind und G anderer chemischer Natur ist. G enthält die zumindest eine Gruppe X, die eine Verbindung mit zumindest einer Gruppe Y, die in zumindest einer Polymersorte A enthalten ist, unter Einwirkung elektromagnetischer Strahlung, von Partikelstrahlung und/oder thermischer Energie während oder nach einer Beschichtung eingehen kann. Weitere vorteilhafte Ausgestaltungen erfindungsgemäß einsetzbarer Silane der Struktur III sind solche, bei denen A, E, F als hydrolysierbare Gruppen gleicher chemischer Natur zum Einsatz kommen und G ein organischer Rest ist, der die zumindest eine Gruppe X, die eine Verbindung mit zumindest einer Gruppe Y, die in zumindest einer Polymersorte A enthalten ist, unter Einwirkung elektromagnetischer Strahlung, von Partikelstrahlung und/oder thermischer Energie während oder nach einer Beschichtung eingehen kann, enthält. Hydrolysierbare Gruppen A, B, D, E, F, die in Silanen II und Silanen III vorteilhaft zum Einsatz kommen können, sind Halogen-Atome, insbesondere Chlor, und/oder AlkoxyGruppen, wie beispielsweise Methoxy-, Ethoxy-, n-Propoxy-, iso-Propoxy-, n-Butoxy-, sec-Butoxy- oder tert-Butoxy-Gruppen. Ferner sind Acetoxy-Gruppen einsetzbar. Die weiteren, dem Fachmann bekannten Beispiele für hydrolysierbare Gruppen sind im Sinne dieser Erfindung ebenfalls einsetzbar.

Zu den organischen Resten B, C, D, E, F, die in Silanen II und Silanen III zum Einsatz kommen können, zählen beispielsweise, ohne Anspruch auf Vollständigkeit zu erheben, Methyl-, Ethyl-, n-Propyl-, iso-Propyl-, n-Butyl-, sec-Butyl-, tert-Butyl-Gruppen, Pentyl-Gruppen sowie die verzweigten Isomere, Hexyl-Gruppen sowie die verzweigten Isomere, Heptyl-Gruppen sowie die verzweigten Isomere, Octyl-Gruppen sowie die verzweigten Isomere, Nonyl-Gruppen sowie die verzweigten Isomere, Decyl-Gruppen sowie die verzweigten Isomere, Undecyl-Gruppen sowie die verzweigten Isomere, Dodecyl-Gruppen sowie die verzweigten Isomere, Tetradecyl-Gruppen sowie die verzweigten Isomere, Hexadecyl-Gruppen sowie die verzweigten Isomere, Octadecyl-Gruppen sowie die verzweigten Isomere sowie Eicosyl-Gruppen sowie die verzweigten Isomere. Die erfindungsgemäßen organischen Reste können zudem ringförmige und/oder aromatische Bauelemente enthalten. Repräsentative Strukturen sind Cyclohexyl-, Phenyl- und Benzyl-Gruppen. Es ist ferner erfindungsgemäß, wenn als zumindest ein organischer Rest Oligomere oder Polymere eingesetzt werden, die zumindest eine hydrolysierbare Silyl-Gruppe enthalten.

Zu den organischen Resten E, F, G, in dem zumindest eine Gruppe X, die eine Verbindung mit zumindest einer Gruppe Y, die in zumindest einer Polymersorte A enthalten ist, unter Einwirkung elektromagnetischer Strahlung, von Partikelstrahlung und/oder thermischer Energie während oder nach einer Beschichtung eingehen kann, enthalten ist, zählen beispielsweise die in der folgenden Liste zusammengestellten Verbindungen (die Liste erhebt keinen Anspruch auf Vollständigkeit): Methyl, Ethyl-, n-Propyl-, iso-Propyl-, n-Butyl-, sec-Butyl-, tert-Butyl-Gruppen, Pentyl-Gruppen sowie die verzweigten Isomere, Hexyl-Gruppen sowie die verzweigten Isomere, Heptyl-Gruppen sowie die verzweigten Isomere, Octyl-Gruppen sowie die verzweigten Isomere, Nonyl-Gruppen sowie die verzweigten Isomere, Decyl-Gruppen sowie die verzweigten Isomere, Undecyl-Gruppen sowie die verzweigten Isomere, Dodecyl-Gruppen sowie die verzweigten Isomere, Tetradecyl-Gruppen sowie die verzweigten Isomere, Hexadecyl-Gruppen sowie die verzweigten Isomere, Octadecyl-Gruppen sowie die verzweigten Isomere und Eicosyl-Gruppen sowie die verzweigten Isomere. Die erfindungsgemäßen organischen Reste können zudem ringförmige und/oder aromatische Bauteile enthalten. Repräsentative Strukturen sind Cyclohexyl-, Phenyl- und Benzyl-Gruppen. Es ist ferner erfindungsgemäß, wenn als zumindest ein organischer Rest Oligomere oder Polymere eingesetzt werden, die zumindest eine hydrolysierbare Silyl-Gruppe enthalten. Kommen als einer oder mehrere der Reste E, F, G ein Rest der obigen Liste zur Anwendung, dann ist dieser zusätzlich durch ein chemisches Bauelement, das zumindest eine Gruppe X enthält, modifiziert.

Im Sinne dieser Erfindung bevorzugt einsetzbare Beispiele für Silane mit Struktur II sind Methyltrimethoxysilan, Methyltriethoxysilan, Dimethyldimethoxysilan, Dimethyldiethoxysilan, Trimethylethoxysilan, Ethyltrimethoxysilan, Propyltrimethoxysilan, Propyltriethoxysilan, iso-Butyltrimethoxysilan, iso-Butyltriethoxysilan, Octyltrimethoxysilan, Octyltriethoxysilan, iso-Octyltrimethoxysilan, iso-Octyltriethoxysilan, Hexadecyltrimethoxysilan, Hexadecyltriethoxysilan, Octadecylmethyldimethoxysilan, Phenyltrimethoxysilan, Phenyltriethoxysilan, Cyclohexylmethyldimethoxysilan, Dicyclopentyldimethoxysilan.

Ein Beispiel für silylfunktionalisierte Oligomere oder Polymere, die erfindungsgemäß zum Einsatz kommen können, ist Polyethylenglykol, das mit einer Trimethoxysilan-Gruppe verknüpft ist.

Im Sinne dieser Erfindung besonders bevorzugt einsetzbare Vertreter der Silane mit Struktur III, die zumindest eine Funktionalisierung tragen, sind beispielsweise N-(2-Aminoethyl)-3-aminopropyltrimethoxysilan, N-(2-Aminoethyl)-3-aminopropyltriethoxysilan, 3-Aminopropyltrimethoxysilan, 3-Aminopropyltriethoxysilan, 3-Aminopropyldiethoxymethylsilan, N-(2-Aminoethyl)-3-aminopropyldimethoxymethylsilan, (N-Butyl)-3-aminopropyltrimethoxysilan, 3-(N-Ethylamino)-2-methylpropyltrimethoxysilan, 4-Amino-3,3-dimethylbutyltrimethoxysilan, 4-Amino-3,3-dimethylbutyldimethoxymethylsilan, (N-Cyclohexyl)-aminomethyldimethoxymethylsilan, (N-Cyclohexyl)-aminomethyltrimethoxysilan, (N-Phenyl)-3-aminopropyltrimethoxysilan, (N-Phenyl)-aminomethyldimethoxymethylsilan, (N-Benzyl-2-aminoethyl)-3-aminopropyltrimethoxysilan, [2-(N-Benzyl-N-vinylamino)-ethyl]-3-aminopropyltrimethoxysilan Hydrogenchlorid, [2-(N-Benzyl-N-vinylamino)-ethyl]-3-aminopropyltrimethoxysilan, Bis-(3-propyltriethoxysilyl)-amin, Vinyltrimethoxysilan, Vinyltriethoxysilan, Vinyl-tri(2-methoxyethoxy)-silan, Vinyltriisopropoxysilan, Vinyldimethoxymethylsilan, Vinyltriacetoxysilan, 3-Triethoxysilylpropylbernsteinsäureanhydrid, 3-Glycidyloxypropyltrimethoxysilan, 3-Glycidyloxypropyltriethoxysilan, 2-(3,4-Epoxycyclohexyl)-ethyltriethoxysilan, 3-Glycidyloxypropyldiethoxymethylsilan, 3-Methacryloyloxypropyltrimethoxysilan, 3-Methacryloyloxypropyltriethoxysilan, 3-Methacryloyloxypropyltriisopropoxysilan, 3-Methacryloyloxypropyldimethoxymethylsilan, 3-Methacryloyloxypropyldiethoxymethylsilan, 3-Chloropropyltrimethoxysilan, 3-Chloropropyltriethoxysilan, 3-Isocyanatopropyltrimethoxysilan, 3-Isocyanatopropyltriethoxysilan, Isocyanatomethyltrimethoxysilan, Isocyanatomethyldimethoxymethylsilan, Tris-[3-(trimethoxysilyl)-propyl]-isocyanurat, 3-Ureidopropyltrimethoxysilan, 3-Ureidopropyltriethoxysilan, 2-Hydroxy-4-(3-triethoxysilylpropoxy)-benzophenon, 4-(3'-Chlorodimethylsilylpropoxy)-benzophenon, 3-Mercaptopropyltrimethoxysilan, 3-Mercaptopropyldimethoxymethylsilan, Bis-(3-triethoxysilylpropyl)-disulfan, Bis-(3-triethoxysilylpropyl)-tetrasulfan, Bis-(triethoxysilylpropyl)-polysulfan, Octadecylaminodimethyltrimethoxysilylpropylammoniumchlorid.

Silane, die in WO 00/43539 durch Biochip Technologies oder in EP 281 941 B1 durch Ciba Geigy offenbart werden, und solche, die von Kolar et al. publiziert wurden [A. Kolar, H. F. Gruber, G. Greber, JMS Pure Appl. Chem., 1994, A31, 305 - 318], können ebenfalls im Sinne dieser Erfindung als Silane mit der Struktur III eingesetzt werden. Ebenso können Organotitan-Verbindungen eingesetzt werden, wobei dies optional in Verbindung mit Silanen geschehen kann.

Es ist ebenfalls erfindungsgemäß vorteilhaft, wenn Silane der Struktur III zum Einsatz kommen, die mit einer chemischen Baueinheit, die zumindest eine Gruppe X enthält, derivatisiert sind. Hierunter ist zu verstehen, dass Silane der Struktur III mit nicht erfindungsgemäßer Funktionalisierung vor und/oder nach der Oberflächenmodifikationsreaktion mit den Füllstoffpartikeln mit einer chemischen Baueinheit, über die die zumindest eine erfindungsgemäße Gruppe X in das Silan eingebracht wird und nach dieser Silanmodifikationsreaktion und der Oberflächenmodifikationsreaktion zur Ausbildung einer Verbindung mit zumindest einer Gruppe Y zur Verfügung steht, modifiziert werden.

Die Oberflächenmodifikation kann vollständig durch zumindest einen Vertreter der Silane III geschehen. Es ist aber auch möglich, eine Kombination aus Silanen III und Silanen II zu verwenden. Eine solche Kombination ist dann erfindungsgemäß, wenn zumindest 1 Gew.-%, bevorzugt zumindest 5 Gew.-% zumindest eines Vertreters der Silane III eingesetzt werden.

Silane werden besonders bevorzugt im Sinne dieser Erfindung als Oberflächenmodifikatoren eingesetzt, wenn Füllstoffpartikel zur Anwendung kommen, die zumindest im Zustand der nicht oberflächenmodifizierten Basiseinheit an der Oberfläche Hydroxy-Gruppen tragen. Beispiele für solche Füllstoffpartikelsorten sind Metalloxide, insbesondere amorphes Siliziumdioxid. Eine beispielhafte Möglichkeit, eine Oberflächenmodifikation zu realisieren, geben Bauer und Kollegen [F. Bauer, H. Ernst, U. Decker, M. Findeisen, H.-J. Gläsel, H. Langguth, E. Hartmann, R. Mehnert, C. Peuker, Macromol. Chem. Phys., 2000, 201, 2654 - 2659] und Rothon [R. N. Rothon (Hrsg.), Particulate Filled Polymer Composites, 2. Aufl., 2003, Rapra Technology, Shawbury, pp. 153-206].

Partikel, die im Zustand der nicht oberflächenmodifizierten Basiseinheit an der Oberfläche ionische Gruppen tragen, lassen sich bevorzugt mit Tensiden und/oder Fettsäuren modifizieren.

Als Tenside können generell alle quaternären Ammoniumverbindungen, protonierten Amine, organischen Phosphoniumionen und Aminocarbonsäuren zum Einsatz kommen, die ein amphiphiles Verhalten zeigen. Vorteilhaft lassen sich Ammoniumverbindungen einsetzen, die zumindest drei organische Reste tragen, wie beispielsweise Alkylammoniumsalze, Trimethylalkylammoniumsalze, Dimethyldialkylammoniumsalze, Methylbenzyldialkyl-ammoniumsalze, Dimethylbenzylalkylammoniumsalze oder Alkylpyridiniumsalze. Es können ferner alkoxylierte quaternäre Ammoniumverbindungen zum Einsatz kommen.

Zwei Klassen an Tensiden können im Sinne dieser Erfindung unterschieden werden, zum einen solche, die neben den Gruppen, die zu einer Wechselwirkung mit der Basisoberfläche befähigt sind, ausschließlich organische Reste tragen, die chemisch inert sind (siehe Struktur IV), zum anderen solche, die neben den Gruppen, die zu einer Verknüpfung mit der Basisoberfläche befähigt sind, zumindest einen organischen Rest enthalten, der zumindest eine Gruppe X trägt, die eine Verbindung mit zumindest einer Gruppe Y, die in zumindest einer Polymersorte A enthalten ist, unter Einwirkung elektromagnetischer Strahlung, von Partikelstrahlung und/oder thermischer Energie während oder nach einer Beschichtung eingehen kann (siehe Struktur V). In Tensid IV können die Substituenten A, B, D unabhängig voneinander organische Reste oder Wasserstoff sein, der Substituent C ist ein langkettiger organischer Rest. Als Gegenionen können beliebige Anionen zum Einsatz kommen. Beispiele sind Chlorid, Bromid, Hydrogensulfat, Dihydrogenphosphat und Tetrafluorborat. Dem Fachmann sind weitere bekannt, die ebenfalls im Sinne dieser Erfindung eingesetzt werden können. Die organischen Reste können unabhängig voneinander linear oder verzweigt sein, gesättigt oder ungesättigt vorliegen, aus aliphatischen, olefinischen und/oder aromatischen Elementen aufgebaut sein und 1 bis 22 Kohlenstoffatome enthalten. Typische Substituenten, die als organische Reste verwendet werden, umfassen Methyl-Gruppen, Ethyl-Gruppen, n-Propyl-Gruppen, iso-Propyl-Gruppen, n-Butyl-Gruppen, sec-Butyl-Gruppen, tert-Butyl-Gruppen, lineare oder verzweigte Pentyl-Gruppen, lineare oder verzweigte Hexyl-Gruppen, lineare oder verzweigte Heptyl-Gruppen, lineare oder verzweigte Octyl-Gruppen, Benzyl-Gruppen oder Gruppen mit höheren Anzahlen an Kohlenstoffatomen. Als langkettige organische Reste kommen bevorzugt Dodecyl-Gruppen, Tetradecyl-Gruppen, Hexadecyl-Gruppen, Octadecyl-Gruppen oder Eicosyl-Gruppen in gesättigter oder ungesättigter Form zum Einsatz. Da es sich bei den Edukten der Tensidherstellung häufig um Naturprodukte handelt, findet man nur selten kettenreine Alkylsubstituenten. Vielmehr liegt häufig ein Gemisch verschieden langer Alkylketten vor. Besonders bevorzugt als langkettige organische Reste werden Talg-Reste (ungesättigt) oder hydrierte Talg-Reste (gesättigt) eingesetzt. Es ist außerdem erfindungsgemäß, dass die Tensidfunktion durch Oligomere oder Polymere übernommen wird, die so funktionalisiert sind, dass sie zumindest eine kationische Gruppe tragen.

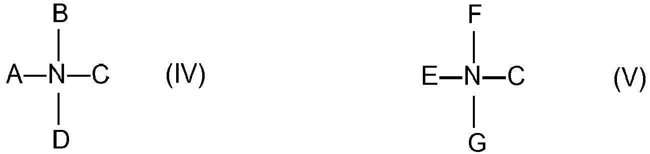

Beispiele, die bevorzugt im Sinne dieser Erfindung als Tenside der Struktur IV eingesetzt werden können, sind Hexadecyltrimethylammoniumchlorid oder -bromid, Methylditalgammoniumchlorid oder -bromid, wobei die Talg-Reste gesättigt oder ungesättigt vorliegen können, Dimethyltalgbenzylammoniumchlorid oder-bromid, wobei die Talg-Reste gesättigt oder ungesättigt vorliegen können, Dimethyltalg-(2-ethylhexyl)-ammoniumchlorid oder -bromid, wobei die Talg-Reste gesättigt oder ungesättigt vorliegen können, Dimethylditalgammoniumchlorid oder -bromid, wobei die Talg-Reste gesättigt oder ungesättigt vorliegen können.

Tenside, die in EP 900 260 B1 durch Akzo Nobel, US 5,739,087 durch Southern Clay, US 5,718,841 durch Rheox, US 4,141,841 durch Procter & Gamble und durch H. Großmann [H. Großmann in Katalysatoren, Tenside und Mineralöladditive, H. Falbe, U. Hasserodt (Hrsg.), 1978, G. Thieme, Stuttgart, S. 135ff] offenbart werden, können ebenfalls im Sinne dieser Erfindung als Tenside mit der Struktur IV eingesetzt werden.

Vorteilhafte Auslegungen erfindungsgemäß einsetzbarer Tenside der Struktur V sind solche, bei denen die Substituenten E, F, G unabhängig voneinander organische Reste oder Wasserstoff sein können und der Substituent C ein langkettiger organischer Rest ist. Als Gegenionen können beliebige Anionen zum Einsatz kommen. Beispiele sind Chlorid, Bromid, Hydrogensulfat, Dihydrogenphosphat und Tetrafluorborat. Die organischen Reste können unabhängig voneinander linear oder verzweigt sein, gesättigt oder ungesättigt vorliegen, aus aliphatischen, olefinischen und/oder aromatischen Elemente aufgebaut sein und 1 bis 22 Kohlenstoffatome enthalten. Typische Substituenten, die als organische Reste verwendet werden, umfassen Methyl-Gruppen, Ethyl-Gruppen, n-Propyl-Gruppen, iso-Propyl-Gruppen, n-Butyl-Gruppen, sec-Butyl-Gruppen, tert-Butyl-Gruppen, lineare oder verzweigte Pentyl-Gruppen, lineare oder verzweigte Hexyl-Gruppen, lineare oder verzweigte Heptyl-Gruppen, lineare oder verzweigte Octyl-Gruppen, Benzyl-Gruppen oder Gruppen mit höheren Anzahlen an Kohlenstoffatomen. Als langkettige organische Reste kommen bevorzugt Dodecyl-Gruppen, Tetradecyl-Gruppen, Hexadecyl-Gruppen, Octadecyl-Gruppen oder Eicosyl-Gruppen in gesättigter oder ungesättigter Form zum Einsatz. Auch bei den Edukten der Herstellung der Tenside V werden häufig Naturprodukte eingesetzt, so dass selten kettenreine Alkylsubstituenten, sondern ein Gemisch verschieden langer Alkylketten vorliegt. Besonders bevorzugt als langkettige organische Reste werden Talg-Reste (ungesättigt) oder hydrierte Talg-Reste (gesättigt) eingesetzt. Es ist außerdem erfindungsgemäß, dass die Tensidfunktion durch Oligomere oder Polymere übernommen wird, die so funktionalisiert sind, dass sie zumindest eine kationische Gruppe tragen. Bei den Tensiden V enthält zumindest einer der Substituenten E, F, G, C zumindest eine Gruppe X, die eine Verbindung mit zumindest einer Gruppe Y, die in zumindest einer Polymersorte A enthalten ist, unter Einwirkung elektromagnetischer Strahlung, von Partikelstrahlung und/oder thermischer Energie während oder nach einer Beschichtung eingehen kann. Tenside, die in EP 900 260 B1 durch Akzo Nobel, US 5,739,087 durch Southern Clay, US 5,718,841 durch Rheox, US 4,141,841 durch Procter & Gamble und durch H. Großmann [H. Großmann in Katalysatoren, Tenside und Mineralöladditive, H. Falbe, U. Hasserodt (Hrsg.), 1978, G. Thieme, Stuttgart, S. 135ff] offenbart werden, können ebenfalls im Sinne dieser Erfindung als Tenside mit der Struktur V eingesetzt werden, solange sie mit zumindest einer Gruppe X unter Umständen auch zusätzlich zur offenbarten Struktur modifiziert sind.

Beispiele, die bevorzugt im Sinne dieser Erfindung als Tenside der Struktur V eingesetzt werden können, sind Methyltalg-di-(2-hydroxyethyl)-ammoniumchlorid oder -bromid, Allyldimethyltetradecylchlorid oder -bromid, Allyldimethylhexadecylammoniumchlorid oder -bromid, Allyldimethyloctadecylammoniumchlorid oder -bromid.

Im Sinne dieser Erfindung ist es bevorzugt möglich, eine Kombination von Tensiden IV und Tensiden V einzusetzen. In dieser Auslegungsform der Erfindung sind Vertreter der Tenside V zu mindestens 1 Gew.-%, bevorzugt zu mindestens 5 Gew.-% unter allen eingesetzten Tensiden enthalten. Ferner können Tenside IV oder V in Kombination mit kationischen Verbindungen eingesetzt werden, die selbst keine Tenside sind, aber zumindest eine Gruppe X tragen, die eine Verbindung mit zumindest einer Gruppe Y, die in zumindest einer Polymersorte A enthalten ist, unter Einwirkung elektromagnetischer Strahlung, von Partikelstrahlung und/oder thermischer Energie während oder nach einer Beschichtung eingehen kann. Zumindest 1 Gew.%, bevorzugt zumindest 5 Gew.-% einer solchen kationischen Verbindung werden erfindungsgemäß in Kombination mit Tensiden IV und/oder V eingesetzt. Kommen solche kationischen Verbindungen zum Einsatz, dann beträgt die Summe an eingesetzten Tensiden IV und Tensiden V höchstens 99 Gew.-%, bevorzugt höchstens 95 Gew.-% beträgt, wobei Tenside V vollständig durch Tenside IV ersetzt sein können. Beispiele für solche kationischen Verbindungen sind (2-Acryloyloxyethyl)(4-benzoylbenzyl)-dimethylammoniumchlorid oder -bromid, 3-Trimethylammoniumpropylmeth-acrylamid Chlorid oder Bromid, 2-Trimethylammoniumethylmethacrylat Chlorid oder Bromid, 3-Dimethylalkylammoniumpropylmethacrylamid Chlorid oder Bromid, 2-Dimethylalkylammoniummethylmethacrylat Chlorid oder Bromid.

Tenside werden besonders bevorzugt im Sinne dieser Erfindung eingesetzt, wenn Füllstoffpartikel zur Anwendung kommen, die an der Oberfläche (im Zustand der nicht oberflächenmodifizierten Basiseinheit) negative Ladungen oder Teilladungen aufweisen. Beispiele für solche Füllstoffpartikelsorten sind einige Tonminerale, insbesondere Smectite, bei denen interkalierte Kationen durch Tenside ausgetauscht werden können. Ein Prinzip, wie ein solcher Austausch erfolgen kann, formuliert Lagaly [G. Lagaly in Tonminerale und Tone, K. Jasmund, G. Lagaly (Hrsg.), 1993, Steinkopff, Darmstadt, S. 366ff].

Es können ferner Kombinationen erfindungsgemäßer Silane und erfindungsgemäßer Tenside verwendet werden. Zumindest eine der eingesetzten Oberflächenmodifikationsreagenzien enthält zumindest eine Gruppe X, die in der Lage ist, mit zumindest einer Gruppe Y, die in der Polymersorte A vorhanden ist, unter Einwirkung elektromagnetischer Strahlung, von Partikelstrahlung und/oder thermischer Energie während oder nach einer Beschichtung eine Verbindung einzugehen.

### Weitere Bestandteile

Es ist außerdem erfindungsgemäß, optional Polymere C, die zumindest eine Gruppe vom Typ X enthalten, und/oder Polymere C, die zumindest eine Gruppe X und zumindest eine Gruppe vom Typ Y enthalten, und/oder Polymere C, die weder Gruppen vom Typ X noch vom Typ Y tragen, einzusetzen. Für die Zusammensetzung jener optional einsetzbaren Polymere, die keine Gruppen vom Typ X oder Y enthalten, gelten die gleichen Angaben hinsichtlich Aufbau, Zusammensetzung, Wahl der Monomere, Erweichungstemperatur und Struktur, wie sie in der Definition für die Polymere A zu finden sind, abgesehen von den Angaben, die dort im Hinblick auf die Gruppen Y gemacht sind. Für optional einsetzbare Polymere, die zumindest eine Gruppe X enthalten, gelten die Angaben, die für Polymere A gemacht wurden, jedoch enthalten solche Polymere C Gruppen der Sorte X und nicht Gruppen der Sorte Y und können daher mit zumindest einer Gruppe Y des zumindest einen Polymers der Sorte A durch Einwirken elektromagnetischer Strahlung, von Partikelstrahlung und/oder thermischer Energie während oder nach einer Beschichtung eine Verbindung eingehen. Für den Einbau der Gruppen X in Polymeren C gelten die gleichen Angaben, die für die Gruppen Y in den Polymeren A gemacht wurden. Kommen Polymere zum Einsatz, die Gruppen X und Y tragen, dann gelten die gleichen Angaben hinsichtlich Aufbau, Zusammensetzung, Wahl der Monomere, Erweichungstemperatur und Struktur, wie sie in der Definition für die Polymere A zu finden sind, jedoch um den Zusatz erweitert, dass zusätzlich auch zumindest eine Gruppe X im Polymer enthalten ist. Für den Einbau der Gruppen X und Y in Polymeren C, die beide Sorten an Gruppen tragen, gelten die gleichen Angaben, die für die Gruppen Y in den Polymeren A gemacht wurden.

Als weitere Bestandteile können die erfindungsgemäßen Haftklebemassenformulierungen Klebharze, Weichmacher, rheologisch wirksame Additive, Katalysatoren, Initiatoren, Stabilisatoren, Kompatibilisatoren, Kopplungsreagenzien, Vernetzer, Antioxidantien, weitere Alterungsschutzmittel, Lichtschutzmittel, Flammschutzmittel, Pigmente, Farbstoffe, weitere Füllstoffe, insbesondere solche, die nicht zu der zumindest einen Füllstoffpartikelsorte B zählen, und/oder Blähmittel enthalten.

### Kombinationen von Gruppen X und Y

Die erfindungsgemäßen Haftklebemassen enthalten zumindest eine Polymersorte A und zumindest eine Füllstoffpartikelsorte B. Polymere A enthalten zumindest zwei Gruppen Y, Füllstoffpartikel B enthalten zumindest eine Sorte an Gruppen X. Die Gruppen X und Y sind im Sinne dieser Erfindung so gewählt, dass zwischen diesen Gruppen X und Y oder über diese Gruppen X und Y eine Kopplung zwischen Polymeren A und Füllstoffpartikeln B erzeugt werden kann. Die Kopplung wird während oder nach der Beschichtung durch Einwirken elektromagnetischer Strahlung, von Partikelstrahlung und/oder thermischer Energie initiiert. Bei der Kopplung ist zumindest eine Gruppe X und zumindest eine Gruppe Y beteiligt. Unter Kopplung von zumindest einer Gruppe X und zumindest einer Gruppe Y werden im Sinne dieser Erfindung insbesondere
- eine chemische Reaktion, bei der die zumindest eine Gruppe X mit der zumindest einen Gruppe Y reagiert und zur Bildung einer kovalenten Bindung führt,
- die Bildung von Wasserstoffbrückenbindungen zwischen der zumindest einen Gruppe X und der zumindest einen Gruppe Y und/oder
- die Bildung einer koordinativen Bindung beispielsweise durch Komplexbildung, an der die zumindest eine Gruppe X und die zumindest eine Gruppe Y beteiligt sind, so dass zumindest eine Donor/Akzeptor-Bindung entsteht,

### verstanden.

Die Kopplung kann dabei zwischen den Gruppen X und Y direkt oder auch durch Vermittlung durch eine oder mehrere weitere Substanzen, wie z. B. Kopplungsreagenzien oder Vernetzer, erfolgen. Für die Position und Anzahl der Gruppen X und Y in den erfindungsgemäß einsetzbaren Polymeren A und Füllstoffpartikeln B gelten die Definitionen, die für die Polymere A und die Füllstoffpartikel B gemacht worden sind.

Soll die erfindungsgemäße Kopplung der zumindest einen Polymersorte A mit der zumindest einen Füllstoffpartikelsorte B über die Gruppen Y und X als eine ***chemische Reaktion*** ablaufen, dann sind die beteiligten Gruppen X und Y insbesondere entsprechend der folgenden Ausführungen definiert.

Die erfindungsgemäßen Haftklebemassen enthalten zumindest einen Bestandteil, der zumindest eine Sorte an erfindungsgemäßen Segmenten, die die allgemeine Struktur (R°R°°R°°°C)-X aufweisen, enthält. R°, R°° und R°°° können unabhängig voneinander gesättigte oder ungesättigte, aliphatische oder aromatische Kohlenwasserstoffreste, die auch untereinander verknüpft sein können, gleicher oder unterschiedlicher Art sein. Es ist im Sinne dieser Erfindung auch möglich, dass das in (R°R°°R°°°C)-X aufgeführte Kohlenstoffatom selbst ungesättigt ist. In diesem Fall ist dieses Kohlenstoffatom nur mit X und einem oder zwei der Reste R°, R°° oder R°°° verknüpft. Die Reste R°, R°° und R°°° können unabhängig voneinander eine beliebige Anzahl an Heteroatomen beinhalten. Die Reste R°, R°° und R°°° können niedermolekularer oder polymerer Natur sein. Bis zu zwei der Reste R°, R°° und R°°° können außerdem auch Wasserstoffatome sein. Zumindest einer der Reste R°, R°° und R°°° ist durch eine chemische oder ionische Bindung, durch Chemisorption oder Physisorption mit einem Füllstoffpartikel der Sorte B verknüpft. Die für die Kopplungsreaktion notwendige Gruppe ist mit X bezeichnet.

Das zumindest eine erfindungsgemäße Segment der Struktur (R°R°°R°°°C)-X kann mit zumindest einem Segment, das in zumindest einem weiteren Bestandteil der erfindungsgemäßen Haftklebemasse enthalten ist und das die allgemeine Struktur (R*R**R***C)-Y aufweist, zur Reaktion gebracht werden. R*, R** und R*** können unabhängig voneinander gesättigte oder ungesättigte, aliphatische oder aromatische Kohlenwasserstoffreste, die auch untereinander verknüpft sein können, gleicher oder unterschiedlicher Art sein. Es ist im Sinne dieser Erfindung auch möglich, dass das in (R*R**R***C)-Y aufgeführte Kohlenstoffatom selbst ungesättigt ist. In diesem Fall ist dieses Kohlenstoffatom nur mit Y und einem oder zwei der Reste R*, R** oder R*** verknüpft. Die Reste R*, R** und R*** können unabhängig voneinander eine beliebige Anzahl an Heteroatomen beinhalten. Die Reste R*, R** und R*** können niedermolekularer oder polymerer Natur sein. Bis zu zwei der Reste R*, R** und R*** können außerdem auch Wasserstoffatome sein. Zumindest einer der Reste R*, R** und R*** ist durch eine chemische Bindung mit einer Polymerkette der Sorte A verknüpft. Die für die Kopplungsreaktion notwendige Gruppe ist mit Y bezeichnet. In speziellen Ausführungen dieser Erfindung können einzelne oder mehrere Reste R*, R**, R*** von gleicher Art sein wie R°, R°° oder R°°°. Ebenso ist es erfindungsgemäß, wenn die Gruppe X und die Gruppe Y gleicher Art sind. In diesem speziellen Fall erfolgt die Kopplung vorteilhaft mittels eines Kopplungsreagenzes oder durch Einwirken eines Katalysators oder Initiators. Es ist im Sinne dieser Erfindung besonders vorteilhaft, wenn die Kopplungsreaktion durch Einwirken elektromagnetischer Strahlung und/oder Partikelstrahlung initiiert wird.

Im Sinne dieser Erfindung sind beliebig viele weitere Gruppen einsetzbar, die mit einer Gruppe X und/oder einer Gruppe Y reagieren können.

Eine Kopplungsreaktion kann durch chemische Reaktion direkt zwischen den Gruppen X und Y ablaufen, so dass eine Spezies (R°R°°R°°°C)-X'-Y'-(CR*R**R***) gebildet wird (siehe Abb. 2). X' und Y' sind dabei im Falle einer chemischen Reaktion die Umsetzungsprodukte der Gruppen X beziehungsweise Y. In speziellen Fällen ist für die Kopplung der Gruppen X und Y ein Kopplungsreagenz X^{a}-Y^{a} oder X^{a}-R^{a-}Y^{a} erforderlich. X^{a} und Y^{a} sind Gruppen, die zu einer Reaktion mit Gruppen X bzw. Y befähigt sind und gleicher oder verschiedener Art sein können. Ferner ist es auch möglich, zwei Gruppen X über ein Kopplungsreagenz Y-R^{b}-Y zu verknüpfen sowie zwei Gruppen Y über ein Kopplungsreagenz X-R^{b}-X. R^{a} und R^{b} können gesättigte oder ungesättigte, aliphatische oder aromatische Kohlenwasserstoffreste sein und eine beliebige Anzahl an Heteroatomen beinhalten. Die Reste R^{a} und R^{b} können niedermolekularer oder polymerer Natur sein.

In Tabelle 1 sind einige Beispiele für X und Y zusammengestellt, die erfindungsgemäß einsetzbar sind. Vorteilhaft verwendbare Kombinationen von Gruppen sind mit einem Kreuz gekennzeichnet. Unter Umständen werden für die Reaktion zwischen den angegebenen Gruppen zusätzliche Reagenzien und/oder spezielle Bedingungen benötigt. Solche Reagenzien werden dann der Haftklebemassenformulierung zugesetzt (siehe Abschnitt "Weitere Bestandteile"). Spezielle Bedingungen wie Temperatur oder Strahlung fallen ebenso in die Intention dieser Erfindung. Die Tabelle erhebt nicht den Anspruch auf Vollständigkeit, sondern soll lediglich Beispiele für im Sinne dieser Erfindung einsetzbare Gruppen und Kombinationen einsetzbarer Gruppen vor Augen führen. Dem Fachmann bekannte weitere Gruppen und Kombinationen für entsprechende Reaktionen können ebenfalls erfindungsgemäß eingesetzt werden. Die in Tabelle 1 enthaltenen Reste R¹, R², R³, R⁴, R⁵, R⁶ sowie R^{a}, R^{b}, R^{c}, R^{d}, R^{e}, R^{f} können unabhängig voneinander gesättigte oder ungesättigte, aliphatische oder aromatische Kohlenwasserstoffreste sein, die eine beliebige Anzahl an Heteroatomen enthalten und niedermolekularer oder polymerer Natur und/oder wahlweise Wasserstoffatome sein können. Die Reste können entsprechend der vorstehenden Definition gleichen oder verschiedenen Aufbaus sein. Die Reste R¹, R² und R³ können untereinander verknüpft sein, die Reste R⁵ und R⁶ können untereinander verknüpft sein, die Reste R^{a}, R^{b} und R^{c} können untereinander verknüpft sein und die Reste R^{e} und R^{f} können untereinander verknüpft sein. Zyklische Säureanhydride wie Maleinsäureanhydrid oder Bernsteinsäureanhydrid können als chemische Gruppe in beliebiger Weise an Polymere A oder Füllstoffpartikel B angebaut sein. Maleinsäureanhydrid bietet zudem die Möglichkeit, als Comonomer in Polymeren A eingebaut zu sein.

Unter dem Eintrag "-PI" in Tabelle 1 ist eine Gruppe zu verstehen, die eine Photoinitiatorfunktion innehat. Durch Bestrahlung mit UV-Licht geeigneter Wellenlänge wird die Gruppe aktiviert und, je nach Art des Photoinitiators, eine radikalische Reaktion oder eine kationische Reaktion initiiert. Geeignete Vertreter solcher Gruppen sind Typ-I-Photoinitiatoren, also sogenannte α-Spalter wie Benzoin- und Acetophenon-Derivate, Benzilketale oder Acylphosphinoxide, Typ-II-Photoinitiatoren, also sogenannte Wasserstoffabstraktoren wie Benzophenon-Derivate und einige Chinone, Diketone und Thioxanthone, und kationische Photoinitiatoren, wie zum Beispiel "Photoacid Generators" wie arylierte Sulphonium oder lodonium Salze und dimerisierte arylierte Imidazol-Derivate. Ferner können Triazin-Derivate zur Initiierung radikalischer und kationischer Reaktionen verwendet werden.

Photoinitiierende Gruppen X und/oder Y vom Typ I umfassen im Sinne dieser Erfindung bevorzugt Benzoin, Benzoinether wie beispielsweise Benzoinmethylether, Benzoin-isopropylether, Benzoinbutylether, Benzoin-iso-butylether, Methylolbenzoin-Derivate wie Methylolbenzoinpropylether, 4-Benzoyl-1,3-dioxolan und seine Derivate, Benzilketal-Derivate wie 2,2-Dimethoxy-2-phenylacetophenon oder 2-Benzoyl-2-phenyl-1,3-dioxolan, α,α-Dialkoxyacetophenone wie α,α-Dimethoxyacetophenon und α,α-Diethoxyacetophenon, α-Hydroxyalkylphenone wie 1-Hydroxycyclohexylphenylketon, 2-Hydroxy-2-methyl-1-phenylpropanon und 2-Hydroxy-2-methyl-1-(4-iso-propylphenyl)-propanon, 4-(2-Hydroxyethoxy)-phenyl-2-hydroxy-2-methyl-2-propanon und seine Derivate, α-Aminoalkylphenone wie 2-Methyl-1-[4-(methylthio)-phenyl]-2-morpholinopropan-2-on und 2-Benzyl-2-dimethylamino-1-(4-morpholinophenyl)-butan-1-on, Acylphosphinoxide wie 2,4,6-Trimethylbenzoyldiphenylphosphinoxid und Ethyl-2,4,6-trimethylbenzoylphenylphosphinat und O-Acyl-α-oximinoketone.

Erfindungsgemäß bevorzugt einsetzbare photoinitiierende Gruppen vom Typ II basieren beispielsweise auf Benzophenon und seinen Derivaten wie 2,4,6-Trimethylbenzophenon oder 4,4'-Bis-(dimethylamino)-benzophenon, Thioxanthon und seinen Derivaten wie 2-iso-Propylthioxanthon und 2,4-Diethylthioxanthon, Xanthon und seinen Derivaten und Anthrachinon und seinen Derivaten.

Typ-II-Photoinitiatoren werden besonders vorteilhaft in Kombination mit stickstoffhaltigen Coinitiatoren, den sogenannten Amin-Synergisten eingesetzt. Bevorzugt werden im Sinne dieser Erfindung tertiäre Amine verwendet. Ferner kommen in Kombination mit Typ-II-Photoinitiatoren vorteilhaft Wasserstoffatomdonoren zur Anwendung. Beispiele hierfür sind Substrate, die Amino-Gruppen enthalten. Beispiele für Amin-Synergisten sind Methyldiethanolamin, Triethanolamin, Ethyl-4-(dimethylamino)-benzoat, 2-n-Butoxyethyl-4-(dimethylamino)-benzoat, iso-Acryl-4-(dimethylamino)-benzoat, 2-(Dimethylaminophenyl)-ethanon sowie ungesättigte und damit copolymerisierbare tertiäre Amine, (meth)acrylierte Amine, ungesättigte Amin-modifizierte Oligomere und Polymere auf Polyester- oder Polyetherbasis und Amin-modifizierte (Meth)acrylate. Es ist im Sinne dieser Erfindung möglich, wenn solche chemischen Baugruppen mit Polymeren und/oder Füllstoffen verknüpft sind.

Im Sinne dieser Erfindungen können auch beliebige Kombinationen verschiedener Arten von Typ-I und/oder Typ-II photoinitiierender Gruppen eingesetzt werden.

In einer besonders bevorzugten Variante dieser Erfindung sind Gruppen mit photoinitiierendem Charakter als Gruppen Y in zumindest einer Sorte an Polymeren A enthalten.

In einer weiteren besonders bevorzugten Variante dieser Erfindung sind Gruppen mit photoinitiierendem Charakter als Gruppen X in zumindest einer Sorte an funktionalisierten Füllstoffpartikeln B enthalten.

Läuft die erfindungsgemäße Kopplung der zumindest einen Polymersorte A mit der zumindest einen Füllstoffpartikelsorte B über die Gruppen Y und X über die Bildung von ***Wasserstoffbrückenbindungen*** ab, dann sind die beteiligten Gruppen X und Y entsprechend der folgenden Ausführungen definiert. Siehe hierzu beispielsweise D. Philp, J. F. Stoddard, Angew. Chem., 1996, 108, 1242 - 1286 oder C. Schmuck, W. Wienand, Angew. Chem., 2001, 113, 4493 - 4499.

Die erfindungsgemäßen Haftklebemassen enthalten in diesem Fall zumindest einen Bestandteil, der eine Sorte an Segmenten, die die allgemeine Struktur (R^{#}R^{##}R^{###}C)-X^{#} aufweist, enthält. R^{#}, R^{##} und R^{###} können unabhängig voneinander gesättigte oder ungesättigte, aliphatische oder aromatische Kohlenwasserstoffreste, die auch untereinander verknüpft sein können, gleicher oder unterschiedlicher Art sein. Es ist im Sinne dieser Erfindung auch möglich, dass das in (R^{#}R^{##}R^{###}C)-X^{#} aufgeführte Kohlenstoffatom selbst ungesättigt ist. In diesem Fall ist dieses Kohlenstoffatom nur mit X^{#} und einem oder zwei der Reste R^{#}, R^{##} oder R^{###} verknüpft. Die Reste R^{#}, R^{##} und R^{###} können unabhängig voneinander eine beliebige Anzahl an Heteroatomen beinhalten. Die Reste R^{#}, R^{##} und R^{###} können niedermolekularer oder polymerer Natur sein. Bis zu zwei der Reste R^{#}, R^{##} und R^{###} können außerdem auch Wasserstoffatome sein. Zumindest einer der Reste R^{#}, R^{##} und R^{###} ist durch eine chemische oder ionische, durch Chemisorption oder Physisorption mit einem Füllstoffpartikel B verknüpft. Die für die Kopplungsreaktion notwendige Gruppe ist mit X^{#} bezeichnet.

Das zumindest eine erfindungsgemäße Segment der Struktur (R^{#}R^{##}R^{###}C)-X^{#} ist in der Lage, Wasserstoffbrückenbindungen mit zumindest einem funktionellen Segment, das in zumindest einem weiteren Bestandteil enthalten ist und das die allgemeine Struktur (R^{∼}R^{∼∼}R^{∼∼∼} C)-Y^{∼} aufweist, zu bilden. R^{∼}, R^{∼∼} und R^{∼∼∼} können unabhängig voneinander gesättigte oder ungesättigte, aliphatische oder aromatische Kohlenwasserstoffreste, die auch untereinander verknüpft sein können, gleicher oder unterschiedlicher Art sein. Es ist im Sinne dieser Erfindung auch möglich, dass das in (R^{∼}R^{∼∼}R^{∼∼∼}C)-Y^{∼} aufgeführte Kohlenstoffatom selbst ungesättigt ist. In diesem Fall ist dieses Kohlenstoffatom nur mit Y^{∼} und einem oder zwei der Reste R^{∼}, R^{∼∼} oder R^{∼∼∼} verknüpft. Die Reste R^{∼}, R^{∼∼} und R^{∼∼∼} können unabhängig voneinander eine beliebige Anzahl an Heteroatomen beinhalten. Die Reste R^{∼}, R^{∼∼} und R^{∼∼∼} können niedermolekularer oder polymerer Natur sein. Bis zu zwei der Reste R^{∼}, R^{∼∼} und R^{∼∼∼} können außerdem auch Wasserstoffatome sein. Zumindest einer der Reste R^{∼}, R^{∼∼} und R^{∼∼∼} ist durch eine chemische Bindung mit einer Polymerkette der Sorte A verknüpft. Die für die Kopplungsreaktion notwendige Gruppe ist mit Y^{∼} bezeichnet. In speziellen Ausführungen dieser Erfindung können einzelne oder mehrere Reste R^{∼}, R^{∼∼}, R^{∼∼∼} von gleicher Art sein wie R^{#}, R^{##} oder R^{###}. Ebenso ist es erfindungsgemäß, wenn die Gruppe X^{#} und die Gruppe Y^{∼} gleicher Art sind. In diesem speziellen Fall erfolgt die Kopplung mittels eines Kopplungsreagenzes.

Im Sinne dieser Erfindung sind beliebig viele weitere Gruppen einsetzbar, die mit zumindest einer Gruppe X und/oder zumindest einer Gruppe Y eine Verbindung eingehen können.

Eine Kopplungsreaktion kann durch Ausbildung von Wasserstoffbrückenbindungen direkt zwischen den Gruppen X^{#} und Y^{∼} ablaufen, so dass eine Spezies (R^{#}R^{##}R^{###}C)-X^{#}-Y^{∼}-(CR^{∼}R^{∼∼}R^{∼∼∼}) gebildet wird (siehe Abb. 2). In speziellen Fällen ist für die Kopplung der Gruppen X^{#} und Y^{∼} ein Kopplungsreagenz X^{#a}-Y^{∼a} oder X^{#a}-R^{a'}-Y^{∼a} erforderlich. X^{#a} und Y^{∼a} sind Gruppen, die zu einer Ausbildung von Wasserstoffbrücken mit Y^{∼} bzw. X^{#} befähigt sind und gleicher oder verschiedener Art sein können. Ferner ist es auch möglich, zwei Gruppen X^{#} über ein Kopplungsreagenz Y^{∼}-R^{b}'-Y^{∼} zu verknüpfen sowie zwei Gruppen Y^{∼} über ein Kopplungsreagenz X^{∼}-R^{b'}-X^{∼}. R^{a'} und R^{b'} können gesättigte oder ungesättigte, aliphatische oder aromatische Kohlenwasserstoffreste sein und eine beliebige Anzahl an Heteroatomen beinhalten. Die Reste R^{a'} und R^{b'} können niedermolekularer oder polymerer Natur sein.

Die koppelbaren Gruppen können einzähnig oder vorzugsweise mehrzähnig sein. Zähnigkeit bezieht sich dabei auf die Möglichkeit einer Gruppe, eine bestimmte Anzahl von Wasserstoffbrückenbindungen auszubilden. Wasserstoffbrückenbindungen zwischen einzähnigen oder vorzugsweise mehrzähnigen funktionellen Segmenten sind als strukturbildende Elemente aus verschiedenen Beispielen bekannt. In der Natur dienen Wasserstoffbrückenbindungen zwischen komplementären funktionellen Segmenten zum Aufbau von Desoxyribonukleinsäure (DNS) und Ribonukleinsäure (RNS). Eine spezielle Kombination aus Donor- und Aktzeptorstellen macht es möglich, dass Kopplungen nur nach dem Schlüssel-Schloss-Prinzip erfolgen können. Handelt es sich beispielsweise bei den funktionellen Segmenten α (Typ "Schlüssel") und β (Typ "Schloss") um komplementäre Segmente, die Wasserstoffbrückenbindungen ausbilden können, dann ist eine Verbindung zwischen α und β möglich, zwischen α und α sowie β und β jedoch nicht. Die Natur beschränkt sich bei der Auswahl der funktionellen Segmente beim Aufbau der DNS auf die zwei organischen Basenpaare Adenin/Thymin (bzw. statt Thymin Uracil in RNS) als zweizähnige Segmente und Cytosin/Guanin als dreizähnige Segmente.

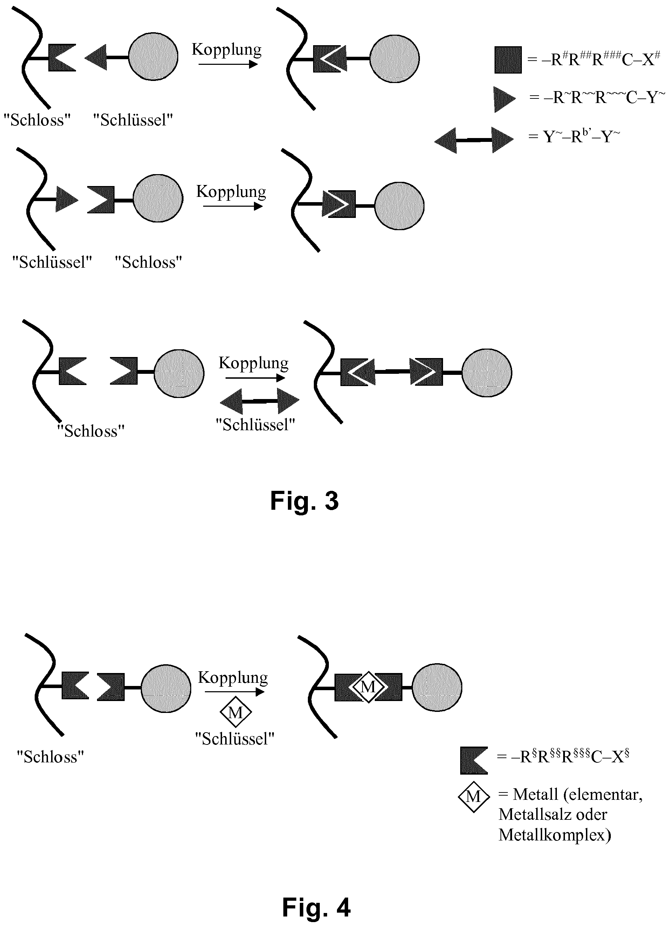

Im Sinne dieser Erfindung können Polymere A und Füllstoffpartikel B mit Gruppen auf Basis von Adenin, Thymin, Uracil, Cytosin, Guanin, deren Derivaten sowie weiteren Verbindungen, die zur Ausbildung von Wasserstoffbindungen nach dem Schlüssel-Schloss-Prinzip in der Lage sind, wie beispielsweise 2-Ureido-4-pyrimidon und dessen Derivate, 2,6-Diacetylaminopyridin und dessen Derivate, Diacetylpyrimidin und dessen Derivate sowie Ureidoacylpyrimidin und dessen Derivate, eingesetzt werden. Diese Aufzählung erhebt nicht den Anspruch auf Vollständigkeit. Dem Fachmann sind vielmehr weitere Systeme bekannt, die erfindungsgemäß eingesetzt werden können. Wählt man diese Art der Funktionalisierung, dann trägt im Sinne dieser Erfindung entweder die zumindest eine Polymersorte A Gruppen vom Typ "Schlüssel" und die zumindest eine Füllstoffpartikelsorte B Gruppen vom Typ "Schloss" oder umgekehrt. Abbildung 3 zeigt zwei Beispiele für die Kopplung reaktiver Bestandteile über Ausbildung von Wasserstoffbrückenbindungen durch Verwendung von zwei komplementären Gruppen, zum einen die direkte Kopplung von Polymer A und Füllstoffpartikel B und zum anderen die Kopplung von Polymer A und Füllstoffpartikel B unter Verwendung eines Kopplungsreagenzes.

Erfindungsgemäß ist ebenfalls die Kopplung von Gruppen über ***koordinative Bindungen*** möglich. Beispiele für koordinative Bindungen sind Ligand-Zentralatom-Bindungen in Komplexen, also die Bildung einer koordinativen Bindung mit Metallatomen, die elementar, in Form von Metallsalzen und/oder in Form von Metallkomplexen vorliegen können, sowie alle weiteren Donor-Akzeptor-Bindungen (siehe hierzu beispielsweise D. Philp, J. F. Stoddard, Angew. Chem., 1996, 108, 1242 - 1286; M. Rehahn, Acta Polym., 1998, 49, 201 - 224 oder B. G. G. Lohmeijer, U. S. Schubert, J. Polym. Sci. A Polym. Chem., 2003, 41, 1413 - 1427).

Wählt man dieses Kopplungsprinzip im Sinne dieser Erfindung, dann enthält die Haftklebemasse Füllstoffpartikel der Sorte B, die Gruppen mit der allgemeinen Struktur (R^{§}R^{§§}R^{§§§}C)-X^{§} enthalten. R^{§}, R^{§§} und R^{§§§} können unabhängig voneinander gesättigte oder ungesättigte, aliphatische oder aromatische Kohlenwasserstoffreste, die auch untereinander verknüpft sein können, gleicher oder unterschiedlicher Art sein. Es ist im Sinne dieser Erfindung auch möglich, dass das in (R^{§}R^{§§}R^{§§§}C)-X^{§} aufgeführte Kohlenstoffatom selbst ungesättigt ist. In diesem Fall ist dieses Kohlenstoffatom nur mit X^{§} und einem oder zwei der Reste R^{§}, R^{§§} oder R^{§§§} verknüpft. Die Reste R^{§}, R^{§§} und R^{§§§} können unabhängig voneinander eine beliebige Anzahl an Heteroatomen beinhalten. Die Reste R^{§}, R^{§§} und R^{§§§} können niedermolekularer oder polymerer Natur sein. Bis zu zwei der Reste R^{§}, R^{§§} und R^{§§§} können außerdem auch Wasserstoffatome sein. Zumindest einer der Reste R^{§}, R^{§§} und R^{§§§} ist durch eine chemische oder ionische Bindung, durch Chemisorption oder Physisorption mit einem Füllstoffpartikel der Sorte B verknüpft. Die für die Kopplungsreaktion notwendige Gruppe ist mit X^{§} bezeichnet. Gleichzeitig enthält die Haftklebemasse Polymere der Sorte A, die Gruppen mit der allgemeinen Struktur (R⁼R⁼⁼R⁼⁼⁼C)-Y⁼ enthalten. R⁼, R⁼⁼ und R⁼⁼⁼ können unabhängig voneinander gesättigte oder ungesättigte, aliphatische oder aromatische Kohlenwasserstoffreste, die auch untereinander verknüpft sein können, gleicher oder unterschiedlicher Art sein. Es ist im Sinne dieser Erfindung auch möglich, dass das in (R⁼R⁼⁼R⁼⁼⁼C)-Y⁼ aufgeführte Kohlenstoffatom selbst ungesättigt ist. In diesem Fall ist dieses Kohlenstoffatom nur mit Y⁼ und einem oder zwei der Reste R⁼, R⁼⁼ oder R⁼⁼⁼ verknüpft. Die Reste R⁼, R⁼⁼ und R⁼⁼⁼ können unabhängig voneinander eine beliebige Anzahl an Heteroatomen beinhalten. Die Reste R⁼, R⁼⁼ und R⁼⁼⁼ können niedermolekularer oder polymerer Natur sein. Bis zu zwei der Reste R⁼, R⁼⁼ und R⁼⁼⁼ können außerdem auch Wasserstoffatome sein. Zumindest einer der Reste R⁼, R⁼⁼ und R⁼⁼⁼ ist durch eine chemische Bindung mit einer Polymerkette der Sorte A verknüpft. Die für die Kopplungsreaktion notwendige Gruppe ist mit Y⁼ bezeichnet. Die Gruppen X^{§} und Y⁼ können gleicher oder verschiedener Art sein. Sind sie verschieden, dann übernimmt eine der Gruppenarten die Donorfunktion und die andere die Akzeptorfunktion, die für die Ausbildung von koordinativen Bindungen erforderlich sind. Sind beide Gruppen von gleicher Art, dann erfolgt die Bildung der koordinativen Bindung über ein Kopplungsreagenz.

Die Gruppen in den Polymeren A und den Füllstoffpartikeln B sind vorteilhaft so aufgebaut, dass sie in der Lage sind, koordinative Bindungen mit Metallen vom Typ M, die elementar, in Form von Metallsalzen oder in Form von Metallkomplexen vorliegen können, ausbilden zu können. Metallkomplexe können auch mehrkernig vorliegen. Einzähnige oder mehrzähnige Segmente können zur Anwendung kommen. Das Kopplungsprinzip ist in Abbildung 4 schematisch dargestellt. Zumindest zwei Gruppen vom Typ "Schlüssel" koppeln durch Koordination von M, das die Funktion "Schloss" übernimmt. Bei der Bildung der koordinativen Bindung kann sich die Struktur von M zu M' ändern. Dies kann sich in veränderten Oxidationsstufen aber auch in einer veränderten Ligandenstruktur und/oder -zusammensetzung äußern. Beim Einsatz von Metallatomen ist es im Sinne dieser Erfindung insbesondere vorteilhaft, spezielle Vorkehrungen zur Dispersion von M in der Haftklebemasse zu treffen. Dies geschieht bevorzugt durch Wahl besonders geeigneter Gegenionen, wenn es sich um Metallsalze handelt, oder besonders geeignete Komplexliganden, wenn es sich um Metallkomplexe handelt. Geeignete Gegenionen und Komplexliganden übernehmen daher die Funktion von Kompatibilisatoren und Dispergierhilfsmitteln. Es ist besonders vorteilhaft, das Metallatom M in einer schmelzbaren Matrix zu dispergieren, die keine Bestandteile enthält, die mit M koordinative Bindungen eingehen können. Dieses Gemisch wird erst unmittelbar vor der Beschichtung der übrigen Haftklebemassenformulierung, die zumindest eine Polymersorte A und zumindest eine Füllstoffpartikelsorte B enthält, zudosiert.

Besonders bevorzugt ist eine Kopplung unter Verwendung von chelatisierenden Segmenten. Beispiele für Liganden, die als Gruppen zum Einsatz kommen können, sind Bipyridin und Terpyridin sowie deren Derivate, Acetylacetonat und dessen Derivate, Ethylendiamintetraessigsäure und dessen Derivate, Nitrilotriessigsäure und dessen Derivate, Hydroxyethylethylendiamintriessigsäure und dessen Derivate, Diethylentriaminpentaessigsäure und dessen Derivate sowie Carbonsäuren. Diese Aufzählung erhebt nicht den Anspruch auf Vollständigkeit. Dem Fachmann sind vielmehr weitere Systeme bekannt, die erfindungsgemäß eingesetzt werden können. Diese Gruppen sind untereinander nicht reaktiv. Alle diese Gruppen enthaltenden Bestandteile können daher in einem Massestrom verwendet werden. Die Kopplung der Gruppen erfolgt, sobald das Metallatom M enthaltende Gemisch dem Massestrom zugemischt wird, was im Sinne dieser Erfindung unmittelbar vor der Beschichtung geschieht.

Als Metallatome eignen sich im Sinne dieser Erfindung alle diejenigen chemischen Elemente, die in der Lage sind, als Akzeptor für koordinative Bindungen zu wirken. Dies sind Erdalkalimetalle, bevorzugt Ca und/oder Mg, Übergangsmetalle, bevorzugt Ti, Mn, Fe, Co, Ni, Cu, Zn, Mo, Ru, Rh, Pd, W, Re, Os, Ir und/oder Pt sowie Al und Lanthanoide. Geeignete Kompatibilisatoren und Dispergierhilfsmittel für diese erfindungsgemäß einsetzbaren Metallatome sind beispielsweise Alkoholate aliphatischer oder aromatischer, gesättigter oder ungesättigter, eine beliebige Anzahl von Heteroatomen enthaltender Moleküle, die niedermolekularer oder polymerer Natur sein können. Es eignen sich ferner offenkettige oder ringförmige ungesättigte Kohlenwasserstoffe, die eine beliebige Anzahl von Heteroatomen enthalten und die niedermolekularer oder polymerer Natur sein können. Weitere erfindungsgemäß einsetzbare Dispergierhilfsmittel und Kompatibilisatoren für M sind niedermolekulare chelatisierende Verbindungen organischer Art.

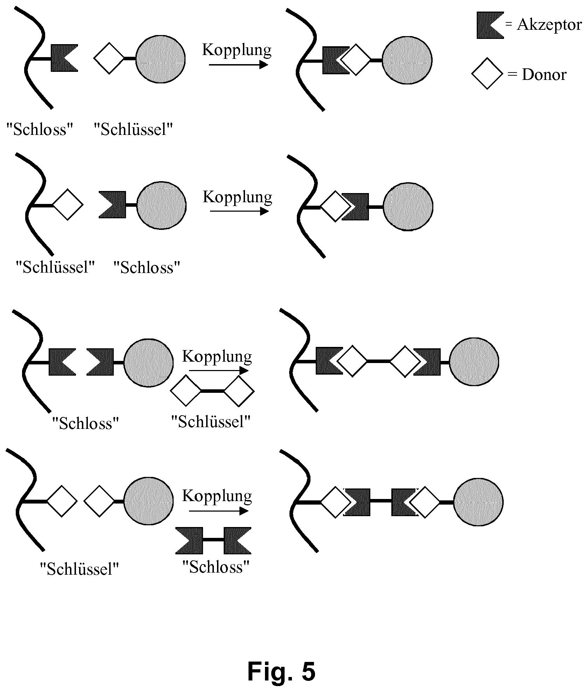

Im Allgemeinen kann M eine Akzeptor-Gruppe ("Schlüssel") sein, die in Verbindung mit einer Donor-Gruppe vom Typ "Schloss" eine koordinative Bindung ausbilden kann. Die Akzeptorgruppe kann in diesem Fall an Polymer A und Füllstoffpartikel B gebunden sein oder auch als Kopplungsreagenzien eingesetzt werden. Dieser allgemeine Fall ist in Abbildung 5 schematisch dargestellt. Es ist ferner erfindungsgemäß, mit Akzeptor-Gruppen ausgestattete Polymere A und Füllstoffpartikel B in Kombination mit Donor-Gruppen tragenden Kopplungsreagenzien zu verwenden.

Im Sinne dieser Erfindung können beliebige Kombinationen verschiedener Arten von Kopplungsreaktionen zur Anwendung kommen. Erfindungsgemäß kommt zumindest eine Art von Kopplungsreaktion zum Einsatz.

### Verfahren zur Herstellung von selbstklebenden Produkten

Die Herstellung erfindungsgemäßer selbstklebender Produkte umfasst die Prozessschritte des Formulierens/Compoundierens, der Beschichtung und der Vernetzung.

### Compoundierverfahren

Die erfindungsgemäßen Formulierungen können unter Verwendung von Lösungsmitteln in Lösungsmittelknetern oder z. B. auch durch Einsatz von Hochgeschwindigkeitsdispersern hergestellt werden. Bevorzugt werden solche Formulierungen aber lösungsmittelfrei hergestellt. Dazu bieten sich im diskontinuierlichen Betrieb Kneter an und im kontinuierlichen Betrieb Extruder, wie beispielsweise Doppelschneckenextruder. Als Compoundieraggregate sind im Sinne dieser Erfindung solche geeignet, die dispersive und optional distributive Mischelemente enthalten. Dispersive Mischelemente sorgen dabei für eine möglichst feine Verteilung der Füllstoffpartikel in der Formulierung, während die distributiven Elemente geschmolzene Bestandteile wie Harze oder Polymere im Gemisch der Haftklebemassenformulierung homogenisieren. Im lösungsmittelfreien diskontinuierlichen Betrieb bieten sich insbesondere Banbury-Mischer, Buss-Kneter oder Baker-Perkins Ko-Kneter an. Im kontinuierlichen Betrieb können Doppelschneckenextruder in co-rotierender Fahrweise bevorzugt eingesetzt werden.

### Beschichtungsverfahren

Als Beschichtungsverfahren können im Sinne dieser Erfindung Rakelverfahren, Düsenrakelverfahren, Rollstabdüsenverfahren, Extrusionsdüsenverfahren, Gießdüsen- und Gießerverfahren zur Anwendung kommen. Ebenfalls erfindungsgemäß sind Auftragsverfahren wie Walzenauftragsverfahren, Druckverfahren, Siebdruckverfahren, Rasterwalzenverfahren, Inkjetverfahren und Sprühverfahren. Zur Speisung des erfindungsgemäßen Beschichtungsaggregats kann zwischen Dosier- und Mischanlage und Beschichtungsaggregat optional ein Förder- und/oder Mischaggregat, z. B. ein Einschnecken- oder Doppelschneckenextruder, zwischengeschaltet sein. Der wahlweise einsetzbare Extruder ist separat beheizbar.

### Vernetzungsverfahren

Besonders bevorzugt ist die Initiierung der Vernetzung der Haftklebemasse nach ihrer Beschichtung. Hierzu bietet sich besonders vorteilhaft ein strahlenchemischer Prozess an. Als eine sehr bevorzugte Variante, die im Sinne dieser Erfindung eingesetzt werden kann, sei die Vernetzung mit ultravioletter Strahlung genannt. Mittels kurzzeitiger Einwirkung von Licht in einem Wellenlängenbereich zwischen 200 bis 400 nm wird das beschichtete Material, das in dieser Auslegung der Erfindung die Photoinitiatorfunktionen bevorzugt als Gruppen X und/oder Gruppen Y enthält, bestrahlt und damit vernetzt. Hierzu kommen insbesondere Quecksilber-Hochdruck- oder -Mitteldruck-Lampen bei einer Leistung von 80 bis 240 W/cm zum Einsatz. Weitere Strahlungsquellen, die im Sinne dieser Erfindung einsetzbar sind, sind die dem Fachmann geläufigen Strahlungsquellen. Wahlweise wird das Emissionsspektrum der Lampe auf den eingesetzten Photoinitiator abgestimmt oder die Art des Photoinitiators an das Lampenspektrum angepasst. Die Bestrahlungsintensität wird der jeweiligen Quantenausbeute des UV-Photoinitiators, dem einzustellenden Vernetzungsgrad und der Bahngeschwindigkeit angepasst.

Weiterhin ist es bevorzugt möglich, die erfindungsgemäßen Haftklebemassenformulierungen nach ihrer Beschichtung mit Elektronenstrahlen zu vernetzen. Dies kann auch in Kombination mit einer UV-Vernetzung geschehen. Typische Bestrahlungsvorrichtungen, die zum Einsatz kommen können, sind Linear-Kathodensysteme, Scannersysteme bzw. Segmentkathodensysteme, sofern es sich um Elektronenstrahlbeschleuniger handelt. Typische Beschleunigungsspannungen liegen im Bereich zwischen 50 kV und 1 MV, vorzugsweise 80 kV und 300 kV. Die angewandten Bestrahlungsdosen liegen zwischen 5 bis 250 kGy, insbesondere zwischen 20 und 100 kGy.

Im Sinne dieser Erfindung ist es weiterhin bevorzugt möglich, die Vernetzung durch Einwirkung thermischer Energie zu realisieren. Dies kann optional in Kombination mit einem oder mehreren strahlenchemischen Verfahren geschehen. Wird thermische Energie zur Initiierung der Vernetzungsreaktion verwendet, dann ist darauf zu achten, dass der Vernetzungsprozess während der Beschichtung noch nicht zu weit fortgeschritten ist, da sich dadurch das Beschichtungsverhalten der Formulierung ändert. Besonders bevorzugt wird in diesem Fall ein Compound hergestellt, das bereits Füllstoffpartikel der Sorte B und Polymere der Sorte A enthält, die Gruppen X und Y jedoch so ausgewählt sind, dass sie direkt nicht miteinander reagieren können sondern nur durch Vermittlung eines Vernetzers oder eines Kopplungsreagenzes. Vernetzer oder Kopplungsreagenz werden dann bevorzugt unmittelbar vor der Beschichtung dem ansonsten fertig homogenisierten Compound zudosiert und mit ihm vermischt. Besonders bevorzugt wird ein Zwei- oder Mehrkomponentenprozess durchgeführt, bei dem alle Rohstoffe so auf zumindest zwei Massevorräte aufgeteilt werden, dass eine räumliche Trennung bis unmittelbar vor der Beschichtung all derjenigen Rohstoffe gewährleistet wird, die zu einer thermischen Reaktion miteinander in der Lage sind. Die thermische Energie wird dann entweder den vorgeheizten Masseströmen entnommen, durch Einstellung einer Temperatur des Beschichtungsaggregats zur Verfügung gestellt oder über einen Wärmekanal bzw. eine Infrarotstrecke nach der Beschichtung realisiert. Es ist ebenfalls erfindungsgemäß möglich, die in einer oder mehreren exothermen Reaktionen freiwerdende thermische Energie zum Ablauf dieser thermischen Reaktion zu nutzen. Kombinationen dieser Verfahrensmöglichkeiten insbesondere mit den strahlenchemischen Vernetzungsverfahren sind im Sinne dieser Erfindung möglich.

Sehr bevorzugt im Sinne dieser Erfindung erfolgt die Herstellung erfindungsgemäßer selbstklebender Produkte in einem kontinuierlichen Prozess, bei dem die Verfahrensschritte der Compoundierung, der Beschichtung und der Vernetzung direkt gekoppelt sind und damit ein in-line-Prozess zur Anwendung kommt.

### Selbstklebende Produkte

### Produktaufbauten

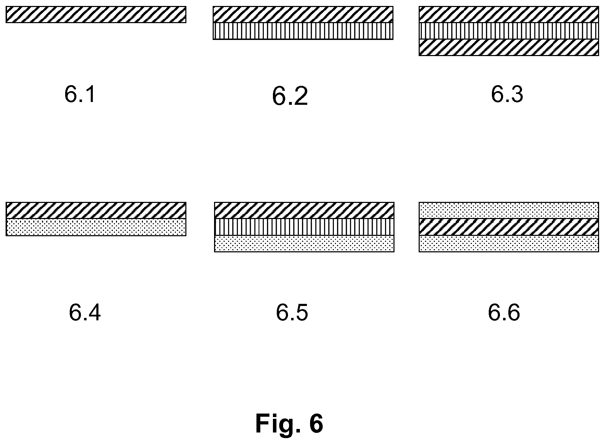

Die durch die erfindungsgemäßen Verfahren hergestellten Haftklebemassen lassen sich zum Aufbau verschiedenartiger selbstklebender Produkte wie beispielsweise Selbstklebebänder oder Selbstklebefolien nutzen. Erfindungsgemäße Aufbauten selbstklebender Produkte sind in Figur 6 dargestellt. Jede Schicht in den erfindungsgemäßen Selbstklebebandaufbauten kann wahlweise geschäumt sein.

Im einfachsten Fall besteht ein erfindungsgemäßes selbstklebendes Produkt aus der Haftklebemasse in einschichtigem Aufbau (Aufbau in Figur 6.1). Dieser Aufbau kann optional einseitig oder beidseitig mit einem Trennliner, z. B. einer Trennfolie oder einem Trennpapier eingedeckt werden. Die Schichtdicke der Haftklebemasse beträgt typischerweise zwischen 1 µm und 2000 µm, bevorzugt zwischen 5 µm und 1000 µm.

Die Haftklebemasse kann sich ferner auf einem Träger, insbesondere einem Folien- oder Papierträger oder einem textilen Flächengebilde befinden (Aufbau in Figur 6.2). Der Träger kann dabei auf der zur Haftklebemasse zeigenden Seite dem Stand der Technik entsprechend vorbehandelt sein, so dass beispielsweise eine Verbesserung der Haftklebemasseverankerung erzielt wird. Ebenso kann die Seite mit einer funktionalen Schicht ausgerüstet sein, die beispielsweise als Sperrschicht fungieren kann. Die Trägerrückseite kann dem Stand der Technik entsprechend vorbehandelt sein, so dass beispielsweise eine Trennwirkung erreicht wird. Die Trägerrückseite kann ferner bedruckt sein. Die Haftklebemasse kann optional mit einem Trennpapier oder einer Trennfolie eingedeckt werden. Die Haftklebemasse weist eine typische Schichtdicke zwischen 1 µm und 2000 µm, bevorzugt zwischen 5 µm und 1000 µm auf.

Bei dem Aufbau gemäß Figur 6.3 handelt es sich um ein doppelseitiges selbstklebendes Produkt, das als Mittelschicht z. B. eine Trägerfolie, ein Trägerpapier, ein textiles Flächengebilde oder einen Trägerschaum enthält. In diesem Aufbau kommen als obere und untere Schicht erfindungsgemäße Haftklebemassen gleicher oder verschiedener Art und/oder gleicher oder verschiedener Schichtdicke zur Anwendung. Der Träger kann dabei auf einer oder beiden Seiten dem Stand der Technik entsprechend vorbehandelt sein, so dass beispielsweise eine Verbesserung der Haftklebemassenverankerung erzielt wird. Ebenso können eine oder beide Seiten mit einer funktionalen Schicht ausgerüstet sein, die beispielsweise als Sperrschicht fungieren kann. Die Haftklebemasseschichten können optional mit Trennpapieren oder Trennfolien eingedeckt werden. Typischerweise weisen die Haftklebemasseschichten unabhängig voneinander Schichtdicken zwischen 1 µm und 2000 µm, bevorzugt zwischen 5 µm und 1000 µm auf.

Als weiteres doppelseitiges selbstklebendes Produkt ist der Aufbau gemäß Figur 6.4 eine erfindungsgemäße Variante. Eine erfindungsgemäße Haftklebemasseschicht trägt auf einer Seite eine weitere Haftklebemassenschicht, die aber beliebiger Natur sein kann und daher nicht erfindungsgemäß sein braucht. Der Aufbau dieses selbstklebenden Produkts kann optional mit einem oder zwei Trennfolien oder Trennpapieren eingedeckt sein. Die Haftklebemasseschichten weisen unabhängig voneinander Schichtdicken zwischen typischerweise 1 µm und 2000 µm, bevorzugt zwischen 5 µm und 1000 µm auf.

Wie beim Aufbau in Figur 6.4 handelt es sich auch bei dem Aufbau gemäß Figur 6.5 um ein doppelseitiges selbstklebendes Produkt, das eine erfindungsgemäße Haftklebemasse enthält sowie eine beliebige weitere. Die beiden Haftklebemasseschichten sind in Figur 6.5 jedoch durch einen Träger, eine Trägerfolie, ein Trägerpapier, ein textiles Flächengebilde oder einen Trägerschaum voneinander getrennt. Der Träger kann dabei auf einer oder beiden Seiten dem Stand der Technik entsprechend vorbehandelt sein, so dass beispielsweise eine Verbesserung der Haftklebemassenverankerung erzielt wird. Ebenso können eine oder beide Seiten mit einer funktionalen Schicht ausgerüstet sein, die beispielsweise als Sperrschicht fungieren kann. Die Haftklebemasseschichten können optional mit Trennpapieren oder Trennfolien eingedeckt werden. Die Haftklebemasseschichten weisen unabhängig voneinander Schichtdicken zwischen typischerweise 1 µm und 2000 µm, bevorzugt zwischen 5 µm und 1000 µm auf.

Das erfindungsgemäße selbstklebende Produkt nach Figur 6.6 enthält eine Schicht erfindungsgemäßen Materials als Mittelschicht, die auf beiden Seiten mit beliebigen Haftklebemassen gleicher oder verschiedener Art ausgestattet ist. Eine oder beide Seiten der Mittelschicht können mit einerfunktionalen Schicht ausgerüstet sein, die beispielsweise als Sperrschicht fungieren kann. Bei den äußeren Haftklebemasseschichten brauchen keine erfindungsgemäßen Haftklebemassen zum Einsatz kommen. Die äußeren Haftklebemasseschichten können optional mit Trennpapieren oder Trennfolien eingedeckt werden. Die äußeren Haftklebemasseschichten weisen unabhängig voneinander Schichtdicken zwischen typischerweise 1 µm und 2000 µm, bevorzugt zwischen 5 µm und 1000 µm auf. Die Dicke der Mittelschicht beträgt typischerweise zwischen 1 µm und 2000 µm, bevorzugt zwischen 5 µm und 1000 um.

### Prüfmethoden

In der Beschreibung dieser Erfindung sind Zahlenwerte für erfindungsgemäße Systeme aufgeführt und es wird Bezug genommen auf Prüfmethoden, mittels derer solche Daten ermittelt werden können. Im Folgenden sind diese Prüfmethoden zusammengestellt.

### Bestimmung der Verarbeitungseigenschaften (Test A)

Schmelzviskositäten (Test A1) und erste Normalspannungsdifferenzen werden für lösungsmittelfreie unvernetzte Prüfmuster in Abhängigkeit der Scherrate und Temperatur mittels eines PC-gesteuerten Hochdruckkapillarrheometers der Fa. Göttfert (Modell Rheograph 2002) aus den gemessenen Druckverlusten im stationären Fließbereich bestimmt. Als Kapillare wird beispielsweise ein Flachschlitz mit der Geometrie 23 mm x 25 mm x 0,16 mm (L x B x H) verwendet. Als Werte für die Scherraten, Viskositäten und erste Normalspannungsdifferenzen werden in dieser Beschreibung korrigierte Daten angegeben. Als Scherrate für die Prüfungen werden 1000 s⁻¹ gewählt. Die Messtemperatur hängt von der Art des untersuchten Materials ab und wird gemeinsam mit den Messergebnissen angegeben. Aus den Daten zur Scherrate, Viskosität und ersten Normalspannungsdifferenz wird der R-Wert als Verhältnis aus erster Normalspannungsdifferenz und dem Produkt aus Viskosität und Scherrate bestimmt (Test A2).

### Bestimmung des Gelanteils (Test B)

Beschichtete und vernetzte lösungsmittelfreie Haftklebemassenproben werden in ein Vliestütchen aus Polyethylen eingeschweißt. Lösliche Bestandteile werden mit Toluol über eine Dauer von drei Tagen unter täglichem Lösungsmittelaustausch extrahiert. Aus der Differenz der Probengewichte vor der Extraktion und nach der Extraktion wird der Gelwert als prozentuale Angabe des Gewichtsanteils des Polymers, das nicht mit Toluol extrahierbar ist, bestimmt.

### Bestimmung der Klebkraft (Test C)

Die Prüfung der Schälfestigkeit (Klebkraft) erfolgt in Anlehnung an PSTC-1. Auf eine 25 µm dicke PET-Folie wird eine 50 µm dicke Haftklebeschicht aufgebracht. Ein 2 cm breiter Streifen dieses Musters wird auf eine geschliffene Stahlplatte durch fünfmaliges doppeltes Überrollen mittels einer 5 kg Rolle verklebt. Die Platte wird eingespannt und der Selbstklebestreifen über sein freies Ende an einer Zugprüfmaschine unter einem Schälwinkel von 180° mit einer Geschwindigkeit von 300 mm/min abgezogen.

### Bestimmung der Scherstandzeit (Test D)

Die Prüfung erfolgt in Anlehnung an PSTC-7. Auf eine 25 µm dicke PET-Folie wird eine 50 µm dicke Haftklebeschicht aufgebracht. Ein 1,3 cm breiter Streifen dieses Musters wird auf einem polierten Stahlplättchen auf einer Länge von 2 cm mit einer 2 kg-Rolle durch zweimaliges doppeltes Überrollen verklebt. Die Plättchen werden für 30 min unter Testbedingungen (Temperatur und Luftfeuchtigkeit), aber ohne Last equilibriert. Dann wird das Testgewicht angehängt, so dass eine Scherbeanspruchung parallel zur Verklebungsfläche entsteht, und die Zeit gemessen, bis die Verklebung versagt.

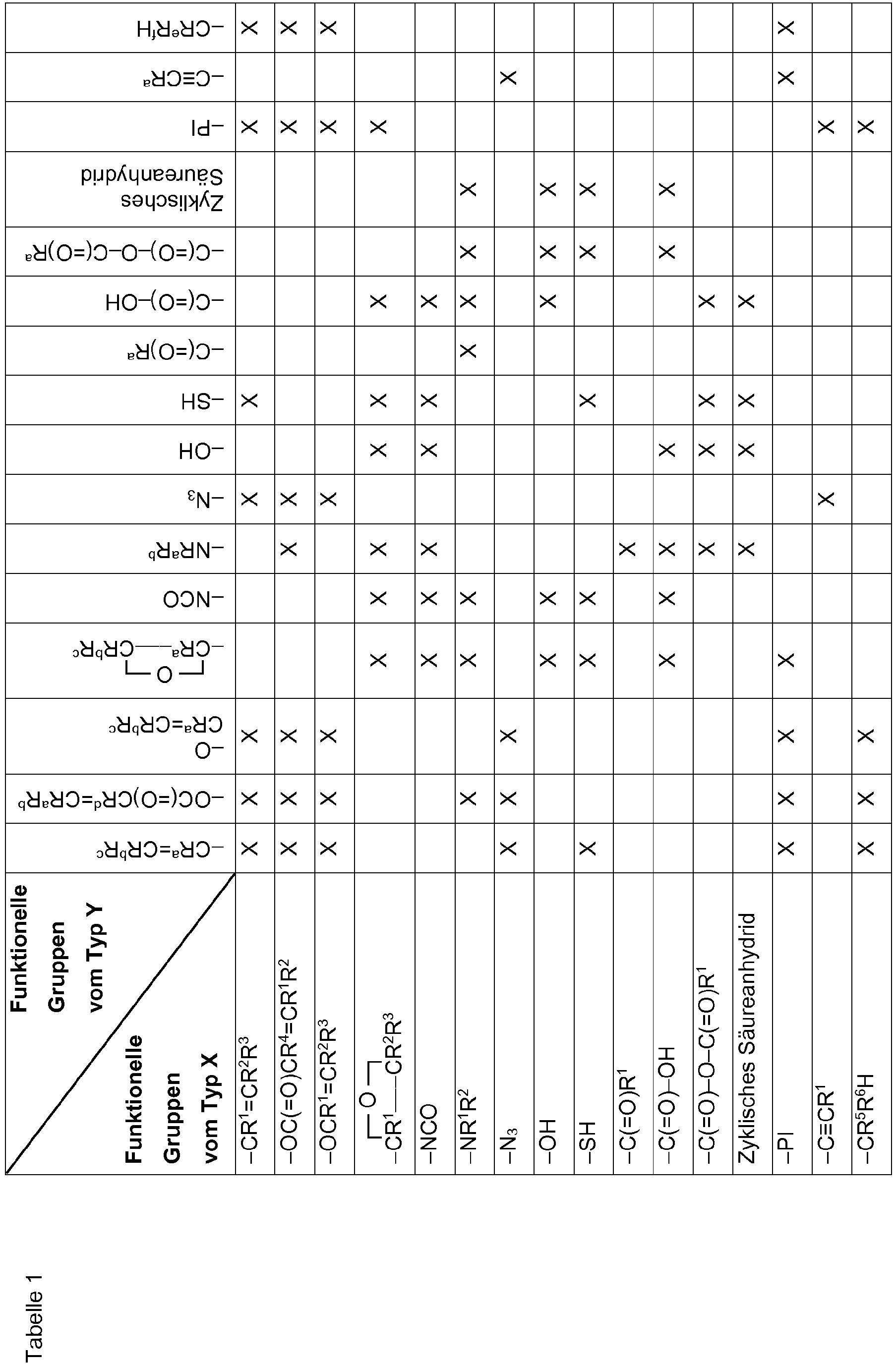

## Patentansprüche

1. Verfahren zur Herstellung einer Haftklebemasse auf Basis zumindest eines Polymers, bei welchem eine Vernetzung des zumindest einen Polymers durchgeführt wird, wobei das Polymer funktionelle Gruppen Y aufweist, wobei weiterhin das Polymer mit zumindest einer Sorte funktionalisierter Partikeln versetzt ist, welche zumindest eine nichtpolymere Basiseinheit aufweisen,
**dadurch gekennzeichnet, dass**
die Partikeln eine Oberflächenmodifikation der Basiseinheit aufweisen, wobei die Oberflächenmodifikation der Partikeln zumindest eine Sorte funktioneller Gruppen X aufweist, und wobei die Vernetzung des Polymers zumindest zum Teil durch eine Reaktion der funktionellen Gruppen X der Partikeln und der funktionellen Gruppen Y des Polymers bewirkt wird.

2. Verfahren nach Anspruch 1, **dadurch gekennzeichnet, dass**
und wobei die Vernetzung durch Einwirkung thermischer Energie bewirkt wird.

3. Verfahren nach Anspruch 2, **dadurch gekennzeichnet, dass**
die Vernetzung mittels thermischer Energie in Kombination mit einem oder mehreren strahlenchemischen Verfahren erfolgt.

4. Verfahren nach einem der vorangehenden Ansprüche, **dadurch gekennzeichnet, dass** zunächst ein Compound hergestellt wird, das bereits funktionalisierte Partikeln sowie zu vernetzende Polymere enthält, wobei die Gruppen X der funktionalisierten Partikeln und die Gruppen Y der Polymere so ausgewählt sind, dass sie direkt nicht miteinander reagieren, sondern nur durch Vermittlung eines Vernetzers oder eines Kopplungsreagenz.

5. Verfahren nach einem der Ansprüche 1 bis 4, **dadurch gekennzeichnet, dass** die zumindest eine Basiseinheit der zumindest einen funktionalisierten Partikelsorte ein amorphes oder kristallines Oxid anorganischer Natur - insbesondere ein Metalloxid oder ein Halbmetalloxid - oder ein Erdalkalisalz ist.

6. Verfahren nach einem der Ansprüche 1 bis 4, **dadurch gekennzeichnet, dass** die zumindest eine Basiseinheit der zumindest einen funktionalisierten Partikelsorte ein Mineral auf Silikatbasis, insbesondere ein Tonmineral ist.

7. Verfahren nach zumindest einem der vorangehenden Ansprüche, **dadurch gekennzeichnet, dass**
die Oberflächenmodifikation der zumindest einen funktionalisierten Partikelsorte durch Organosilane, Tenside, Organotitan-Verbindungen, Fettsäuren und/oder Polyelektrolyte bewirkt wird.

8. Verfahren nach zumindest einem der vorangehenden Ansprüche, **dadurch gekennzeichnet, dass**
die Reaktion zur Bewirkung der Vernetzung der Haftklebemasse eine Kopplungsreaktion ist, insbesondere eine solche
- unter Bildung kovalenter Bindungen
- unter Bildung von Wasserstoffbrückenbindungen
und/oder
- unter Bildung koordinativer Bindungen.

9. Verfahren nach zumindest einem der vorangehenden Ansprüche, **dadurch gekennzeichnet, dass**
die zumindest eine funktionalisierte Partikelsorte in Form von singulären kugelförmigen Partikeln, singulären plättchenförmigen Partikeln und/oder singulären stäbchenförmigen Partikeln vorliegt.

10. Verfahren nach zumindest einem der vorangehenden Ansprüche, **dadurch gekennzeichnet, dass**
die zumindest eine funktionalisierte Partikelsorte in Form von aus mehreren Primärpartikeln gebildeten Partikelaggregaten vorliegt.

11. Verfahren nach Anspruch 9 oder 10, **dadurch gekennzeichnet, dass** die Partikeln bzw. die Partikelaggregate eine räumliche Ausdehnung von nicht mehr als 1000 nm, bevorzugt in zumindest einer Raumrichtung von nicht mehr als 250 nm, sehr bevorzugt in zumindest einer Raumrichtung von nicht mehr als 100 nm aufweisen.

12. Verfahren nach zumindest einem der vorangehenden Ansprüche, **dadurch gekennzeichnet, dass**
der Gewichtsanteil an funktionalisierten Partikeln in der Haftklebemasse bis zu 50 %, bevorzugt bis zu 20 %, sehr bevorzugt bis zu 12 % beträgt.

13. Haftklebemasse, basierend auf zumindest einer vernetzten Polymerkomponente, bei welchem die Vernetzung der Polymerkomponente zumindest zum Teil durch Einbau von funktionalisierten Partikeln bewirkt wird, wobei die Partikeln zumindest eine nichtpolymere Basiseinheit sowie eine Oberflächenmodifikation dieser Basiseinheit aufweisen, wobei die Oberflächenmodifikation der Partikeln zumindest eine Sorte funktioneller Gruppen X aufweist, welche in der Lage sind, mit in der Polymerkomponente vorhandenen funktionellen Gruppen Y zu reagieren.

14. Haftklebemasse nach Anspruch 13, erhältlich nach einem Verfahren nach einem der Ansprüche 1 bis 11.

15. Selbstklebende Produkte, ausgerüstet mit einer Haftklebemasse nach einem der Ansprüche 13 oder 14.
